# EUROPEAN PATENT SPECIFICATION

(11) **EP 3 135 161 B1**
(45) Date of publication and mention of the grant of the patent: **03.04.2019**
(21) Application number: 15182506.4
(22) Date of filing: 26.08.2015
(51) Int. Cl.: A47J 31/42, A47J 42/50

(54) **COFFEE BEAN CONTAINER, COFFEE BREWING APPARATUS COMPRISING SAME AND COFFEE BREWING METHOD**
KAFFEEBOHNENBEHÄLTER, KAFFEEBRÜHVORRICHTUNG DAMIT UND KAFFEEBRÜHVERFAHREN
RÉCIPIENT DE GRAINS DE CAFÉ, APPAREIL D'INFUSION DE CAFÉ COMPRENANT CELUI-CI ET PROCÉDÉ D'INFUSION DE CAFÉ

(43) Date of publication of application: 01.03.2017
(73) Proprietor: Müller, Bernd, 47447 Moers (DE); Lessmann, Lennart, 07973 Greiz (DE)
(72) Inventor: Müller, Bernd, 47447 Moers (DE); Lessmann, Lennart, 07973 Greiz (DE)
(74) Representative: SSM Sandmair

(56) References cited:
- EP-A2- 1 867 258
- WO-A1-2004/098361
- AU-A1- 2009 202 486
- CN-A- 103 654 464
- CN-U- 202 843 356

## Description

The present invention relates to a coffee bean container. In particular, the present invention relates to a detachable coffee bean container which, as a commercial product, can be placed on a known coffee brewing apparatus for feeding coffee beans to said known coffee brewing apparatus. Moreover, the invention relates to a coffee brewing apparatus suitable to receive coffee beans from the detachable coffee bean container. Finally, the invention also relates to a coffee brewing method making use of coffee brewing apparatus comprising the detachable coffee bean container of the present invention.

Coffee brewing apparatus capable of brewing a fresh coffee beverage or - shortly - fresh coffee from water and - originally - whole coffee beans or fragments of coffee beans are well known. When introduced, the coffee brewing apparatus combined the former separate actions (and locations for performing said actions) into one apparatus or one automated method, respectively. Basically (and without restriction), these are the actions of (i) storing whole (or fragmented) coffee beans and water; (ii) metering an appropriate amount of coffee beans to the grinding means; (iii) grinding said coffee beans in a grinding means; (iv) metering the appropriate portion(s) of ground coffee fed from the grinding means to a coffee brewing filter means; (v) flooding the coffee grounds on the filter means with hot water; (vi) extracting, with said hot water, the water-soluble coffee bean components from said coffee grounds; (vii) separating the aqueous extract containing the water-extractable components of the coffee beans (called "coffee beverage" or shortly "coffee") from the residual solid coffee bean components; (viii) collecting said extract (called "coffee beverage" or "coffee") in a suitable receptacle for drinking the coffee beverage or "coffee"; and (ix) discarding the residual solid coffee grounds.

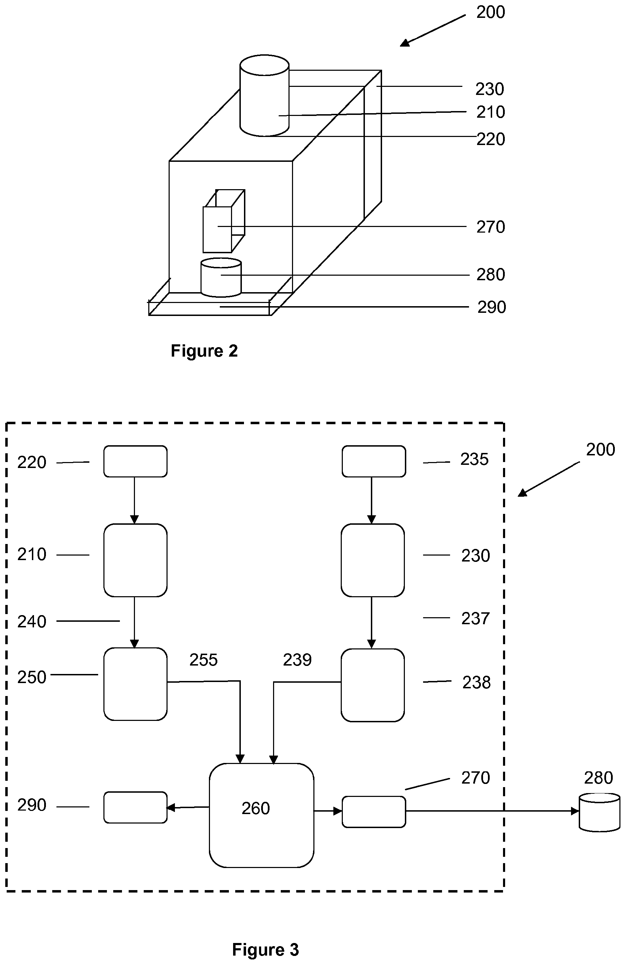

According to the above process steps to be passed through for automatically brewing coffee, such coffee brewing apparatus usually comprise: (i) a storage means for receiving and storing whole or fragmented coffee beans, usually coffee beans of one type, only; (ii) a water tank; (iii) a grinder or mill (including a driving means, usually a motor, for the mill, and metering means for metering an appropriate amount of coffee beans for the grinding process); (iv) metering means for metering an appropriate amount of coffee grounds to a coffee brewing unit; (v) a water-conveying means (e. g. a pump) including water heating means for feeding hot water to the coffee brewing unit; (vi) a coffee brewing unit feeding the coffee brewed into a suitable receptacle for drinking; and (vii) a container for receiving the depleted solid coffee ground residuals for later discarding them. An example of such an automated coffee brewing apparatus of the prior art is shown in Figure 2.

Numerous process steps have to be carried out by coffee brewing apparatus. The coffee brewing apparatus' components included into these process steps of the prior art (and also in accordance with the invention) are shown in Figure 3, wherein the dotted line box 200 represents the coffee brewing apparatus 200. Coffee beans and water are supplied through respective inlets 220, 235 to their respective storage containers 210, 230, guided through respective coffee bean or water passageways 240, 237 to the coffee bean grinding means/mill 250 or the water heater 238, respectively. From there, respective coffee grounds or heated water passageways 255, 239 guide the coffee grounds and the heated water to the coffee brewing unit 260. A brewed coffee beverage flows from the coffee brewing unit 260 through the brewed coffee beverage outlet 270 outside the coffee brewing apparatus 200 into a drinking receptacle 280, while depleted coffee grounds are guided from the coffee brewing unit 260 to a depleted coffee discharge container 290. Including numerous apparatus components, automated coffee brewing apparatus are technically complex "machines" and require the co-operation of said large number of electrically and mechanically connected parts. After having been used for brewing coffee in a professional scale, only, at the beginning of their technical development, coffee brewing apparatus were, and are now developed for brewing coffee beverages on the private consumer or household level and on the professional level. The high costs of such coffee brewing machines, however, were justified by the manufacturers (and finally are accepted by the users) due to the possibility of conveniently brewing high-quality high-flavor coffee from freshly ground coffee beans or fragments thereof.

Such type of coffee brewing apparatus had also one disadvantage in allowing only one type of coffee beans to be stored in the storage container and fed to the apparatus for brewing a coffee beverage. Hence, the user (especially the private user) had a selection of only one type of coffee beans available for brewing coffee.

From the viewpoint of costs and of the expected convenience for the user to select different types and strengths of the coffee beverage, there were also developed coffee brewing apparatus brewing a coffee beverage from one-cup amounts of powdered coffee packed into small cartridges made of e. g. aluminum. Such cartridges are eluted by a suitable amount of hot water swallowing the coffee into a drinking receptacle. Such (relatively low cost) coffee powder-dissolving machines have a great advantage in allowing powdered coffee of many different types and strengths to be filled into said cartridges. Different cartridges were used for making coffee in said type of machines, according to the user's selection. Hence, the consumers' wish of selecting a large variety of types of coffee powder for making coffee of different taste and strength was met, when making coffee on these machines by using coffee powder packed into such cartridges.

On the other hand, due to a use of e. g. aluminum) cartridges and the expensive process of packaging and storing the coffee powder in single sachets and eluting the coffee powder from said sachets in the coffee-making process for one single cup of coffee, the cartridge system (per one portion of coffee received) is relatively expensive. Moreover, the special size and shape of the cartridge allows that only few, or even only one, type of cartridge or sachet can be used for one type of coffee making apparatus. Furthermore, the disposal of the aluminum cartridges creates a lot of environmentally "unacceptable" garbage. In addition, the user's wish of having a coffee beverage freshly brewed from freshly ground coffee beans/coffee grounds cannot be met by coffee made of dissolving coffee powder in hot water.

Hence, it was found that there is a need for an improvement of conventional coffee brewing apparatus in allowing that two (or even several) types of coffee beans be fed from the storage container to the coffee brewing unit of a conventional coffee brewing apparatus. When seeking for improvement, the conventional inlet for feeding pre-ground coffee grounds to the known coffee brewing apparatus was not considered as a suitable solution. One reason is that pre-grinding coffee beans in a separate grinder (or buying pre-ground coffee powder) was considered to be in contradiction the user's wish of brewing coffee from freshly ground coffee beans.

This need was accomplished with on two routes:
Some conventional coffee brewing apparatus comprise two non-detachable coffee bean storage containers/cartridges for exactly two different types of coffee beans to be fed to the coffee bean grinding means of the coffee brewing apparatus.

In one type of such conventional coffee brewing apparatus, the two coffee bean storage containers/cartridges for the two different types of coffee beans each were accompanied by one separate grinding mechanism, and also two separate coffee brewing units were provided. The main advantage is that, basically, this apparatus is two coffee brewing apparatus in one, resulting into a completely separated coffee brewing process for the two types of coffee beans. Thereby, the taste of each of the two types of freshly ground coffee beans in the coffee could be developed very well.

On the other side, the user's choice was restricted to the two different types of coffee beans, and this proposal included the disadvantage of a relatively high price of the apparatus due to the two coffee bean container/two grinding means/two coffee brewing unit structure.

In a different proposal, a coffee brewing apparatus has two coffee bean storage containers/cartridges I and II delivering the coffee beans of types I and II to the same (i. e. one) grinding mill and to the same (i. e. one) coffee brewing unit. This created the problem that, in the space between the coffee bean storage container I (containing coffee beans of the type I) and the grinding mill, as well as within the grinding mill and in the space between the grinding mill and the coffee brewing unit, there were still left coffee beans of the type I (and ground coffee beans of the type I), when grinding of coffee beans of the type II and, after grinding the coffee beans of the type II, the brewing process with coffee grounds of the type II was intended to be started. At that time, the coffee brewing apparatus still continued brewing coffee extracted from coffee beans (and coffee grounds) of the type I for up to two further brewing steps, before the desired brewing of coffee with coffee grounds of the type II started. In other words: Residual (whole or fragmented) coffee beans of the type I in the space between the storage container I and the grinding mill, as well as residual coffee grounds of the type I in the grinding mill and in the space between the grinding mill and the coffee brewing unit prevent the desired coffee made of the coffee beans from the container II containing coffee beans of the type II from being brewed.

The document WO 2010/095,937 relates to an apparatus for brewing coffee beverages from freshly ground whole coffee beans or fragments thereof. In said apparatus, the contain-er/cartridge for storing and feeding coffee beans is a removable, re-fillable and/or exchangeable coffee bean container. According to said document, the coffee bean-storing and -feeding container/cartridge is provided for multiple servings of coffee beans. The apparatus includes: (i) a container having an outer wall and defining an inner volume and being open at at least one end thereof; (ii) conveyor means rotatably driven from the outside of the cartridge; and (iii) coupling means adapted for drivingly coupling the conveyor means to driving or motive means of a coffee brewing apparatus. In said coffee brewing apparatus, the cartridge is openable or open to reveal an exit opening or passage defining a coffee bean outlet. In an advantageous embodiment, the movable conveyor means is associated with the exit passage, and the rotatably driven conveyor means may include a rotating surface element which may be formed as a conveyor disc.

The concept of the above coffee bean cartridge of the prior art is technically complex and requires enhanced efforts and costs to manufacture it. This is also recognized from the fact that the cartridge is disclosed to be made of a metal or of a plastics material.

The document WO 2011/102,715 A2 discloses a coffee bean container for a coffee brewing apparatus of a similar type as the document addressed above, but further including a double metering system, one of which belongs to the cartridge, but is controlled by the coffee brewing apparatus' electronics and mechanics, as soon as the cartridge is connected to the coffee brewing apparatus, while the other metering system is belonging to, and also controlled by, the coffee brewing apparatus. This results into a technically complex system requiring that, particularly, the coffee bean container/cartridge is manufactured at high costs. When the cartridge is connected to the coffee brewing apparatus, it can be operated by the user for one type of coffee beans, only. If brewing of coffee from different types of coffee beans is desired, one technically advanced cartridge per type of coffee beans would be required, making such a system too expensive for a practical application.

< Document AU 2009-202,486 A relates to a coffee bean container comprising a hopper for holding coffee beans and having an outlet; an interface for coupling the hopper and the a coffee grinder, which interface is configured to support the hopper and defines a shaft that, in use, is aligned with the outlet to form a passage for coffee beans to pass from the hopper to the coffee grinder, and the interface comprising a coupling means operable to detachably couple the interface and the coffee grinder, a closure unit having at least one shutter movable to variably constrict the passage to selectively permit or obstruct the flow of coffee beans; and a rotary actuator arranged to move the at least one shutter relative to the passage, wherein the actuator functions independently of the coupling means.

Document CN 202 843 356 U relates to a coffee brewing machine with a detachable coffee bean grinding device. A detachment adjusting mechanism of the coffee bean grinding device comprises a connection portion and an adjusting portion, wherein the connecting portion is connected with a bean box component in a conveniently detachable mode and the adjusting portion is capable of adjusting an upper grinding wheel component to do reciprocating motion and further adjusts the grinding distance between the upper grinding component and a lower grinding component. Therefore, a user can clean and maintain a grinding component conveniently, and the size of the grinding particles can be adjusted according to the requirements at the same time. >

What would be needed is a detachable coffee bean container or detachable cartridge for use with a conventional coffee brewing apparatus which is easy to connect to a conventional coffee brewing apparatus and makes use of, and is adapted to, the coffee bean feeding, grinding and brewing system of an existing apparatus. The technical requirements of such a coffee bean container should be reduced (because it makes use of the technology provided by the coffee brewing apparatus of the invention, once it is available on the user's side), thereby drastically reducing the costs of the container. This would allow producing the coffee bean container as an (ideally disposable) product, which can be offered to, and purchased by, the user at a low price and is already filled with the type of coffee beans desired by the user.

The detachable coffee bean container would be purchased as the coffee bean package filled with a commonly commercial amount of coffee beans of the type desired by the user and provided with a usual aroma protection sealing. Simultaneously, it is provided with a suitable connector allowing connecting it - optionally via a suitable adapter - to said coffee brewing apparatus in a one hand, one step operation. When connected, the detachable coffee bean container is delivering any desired amount of coffee beans to the coffee brewing apparatus, to which it is connected. When a user desires brewing coffee from a type of coffee beans different from the one contained in such a detachable container connected, an easy coffee bean container replacement action could connect another detachable container to the coffee brewing apparatus, thereafter allowing a delivery of different type of coffee beans to be entered into the brewing process. The user would be motivated to store several of such (eventually disposable) coffee bean containers already containing the coffee beans of his/her choice and to connect one (or several) of them to the conventional coffee brewing apparatus for the delivery of the type, and amount, of coffee beans desired. Empty coffee bean containers could be disposed or refilled.

It was surprisingly found that the above objects, and even further objects, can be achieved by the detachable coffee bean container, the coffee brewing apparatus and the coffee brewing process of the present invention.

Hence, the invention relates to a detachable coffee bean container for storing, holding and supplying coffee beans, said container comprising
- a housing having at least one outer wall defining an inner volume capable of storing and holding coffee beans, said housing having at least one bottom side opening defining a coffee bean outlet capable of supplying coffee beans stored and held within the inner volume to the outside of the housing;
[a closure exterior to said bottom side opening of said housing, being in the shape of a flat circular disk closure having a sectoral opening for allowing coffee beans to pass and capable of closing said bottom side opening against, or transiently opening it for, a passage of coffee beans to the outside of the housing, by a mechanism of rotating the closure automatically or by hand; a passageway capable of guiding coffee beans released from the housing through the closure to the outside of the housing; an adapter capable of matching the passageway of the coffee bean container to a coffee bean inlet of a conventional coffee brewing apparatus for supplying a predeterminable amount of coffee beans to said apparatus; wherein said closure is capable of being opened simultaneously with the step of connecting to, and of being closed simultaneously with the step of disconnecting from, the coffee brewing apparatus' coffee bean inlet, after the adapter's matching step, by a circular movement in the plane of the adapter's contacting parts and of the coffee brewing machine's coffee bean inlet; wherein a coffee bean container closure's at least one recess is adapted to come into engagement with a coffee bean inlet's at least one protrusion; said closure is capable of supplying coffee beans from the coffee bean container to a connected coffee brewing apparatus' coffee bean inlet upon opening an aligned route between the coffee bean container and the coffee brewing apparatus' coffee bean inlet by the coffee brewing apparatus' action automatically or by hand; and said closure is capable of being actuated and controlled for closing or opening said bottom side opening of said housing, automatically or by hand, from the outside of the housing by one mechanism selected from the group consisting of rotating the closure, sliding the closure, buckling the closure, lifting the closure, lowering the closure and combinations thereof.

Preferred embodiments of said detachable coffee bean container are claimed in the dependent claims 2 to 5.

The invention also relates to a coffee brewing apparatus comprising a detachable coffee bean storage container capable of storing and holding coffee beans and of supplying them via a coffee bean inlet for brewing coffee; a water storage container capable of storing and holding water and of supplying it via a water inlet to a water heating means for heating the water for brewing coffee; a coffee bean passageway connecting the coffee bean inlet to a coffee grinding means or mill; a ground coffee passageway connecting the mill to a coffee brewing unit, the coffee brewing unit where fresh coffee is brewed from the ground coffee supplied by the ground coffee passageway and the hot water supplied by the water heating means; a brewed coffee outlet filling the freshly brewed coffee into a drinking receptacle; and a depleted coffee discharge container, said coffee brewing apparatus further comprising at least one detachable coffee bean container according to the detailed description below releasably connected to the coffee brewing apparatus' coffee bean inlet and capable of supplying coffee beans to said apparatus.

Preferred embodiments of said coffee brewing apparatus are claimed in the dependent claims 8 to 9.

The invention also relates to a process for brewing coffee from coffee grounds obtained immediately before the brewing step from freshly ground coffee beans on an automatic coffee brewing apparatus, the process comprising the steps of
(a) providing for a coffee brewing apparatus comprising a coffee bean storage container capable of storing and holding coffee beans and of supplying them via a coffee bean inlet for brewing coffee; a water storage container capable of storing and holding water and of supplying it via a water inlet to a water heating means for heating the water for brewing coffee; a coffee bean passageway connecting the coffee bean inlet to a coffee grinding means or mill; a coffee grounds passageway connecting the mill to a coffee brewing unit; the coffee brewing unit where fresh coffee is brewed from the coffee grounds supplied by the coffee grounds passageway, and the hot water supplied by water conveying means from the water heating means; a brewed coffee beverage outlet filling the freshly brewed coffee into a drinking receptacle; and a depleted coffee discharge container;
(b) selecting a detachable coffee bean container as described below in detail and storing and holding a type of desired coffee beans in an amount sufficient for brewing at least one serving of freshly brewed coffee;
(c) connecting the detachable coffee bean container selected in step (b) to said coffee brewing apparatus' coffee bean inlet;
(d) starting the coffee brewing automated procedure on the coffee brewing apparatus, whereupon
(e) the coffee brewing apparatus requests a supply of a predetermined amount of coffee beans from the detachable coffee bean container
(f) to be delivered from the coffee bean container's housing inner volume via the coffee bean container's coffee bean guiding passageway and passing the coffee bean container's bottom side opening closure
(g) to the coffee brewing apparatus' coffee bean inlet; and
(h) delivered via the coffee brewing apparatus' coffee bean passageway to the coffee bean grinding means or mill and further to the coffee brewing apparatus' coffee brewing unit;
(i) receiving a coffee beverage at the coffee brewing apparatus' brewed coffee beverage outlet; and optionally
(j) disconnecting the coffee bean container connected in step (c) from said coffee brewing apparatus' coffee bean storage container; and optionally
(k) selecting a second container as described below in detail and storing and holding a type of coffee beans different from those stored and held by the first container, connecting said second container to the coffee brewing apparatus' coffee bean inlet and starting the coffee brewing automatic procedure on the coffee brewing apparatus with steps (d) et seq. above.

The invention also relates to a process of brewing coffee from coffee grounds obtained immediately before the brewing step from freshly ground coffee beans on an automatic coffee brewing apparatus, the process comprising the steps of
(a) providing for a coffee brewing apparatus comprising a coffee bean storage container capable of storing and holding coffee beans and of supplying them via a coffee bean inlet for brewing coffee; a water storage container capable of storing and holding water and of supplying it via a water inlet to a water heating means for heating the water for brewing coffee; a coffee bean passageway connecting the coffee bean inlet to a coffee grinding means or mill; a coffee grounds passageway connecting the mill to a coffee brewing unit; the coffee brewing unit where fresh coffee is brewed from the coffee grounds supplied by the coffee grounds passageway and the hot water supplied by water conveying means from the water heating means; a brewed coffee beverage outlet filling the freshly brewed coffee into a drinking receptacle; and a depleted coffee discharge container;
(b) selecting a detachable coffee bean container as described below in detail and storing and holding a type of desired coffee beans in an amount sufficient for brewing at least one serving of freshly brewed coffee;
(c) connecting the coffee bean container selected in step (b) to a support for receiving a plurality of coffee bean containers as described below in detail and, in turn connecting said support holding at least one coffee bean container selected in step (b) to said coffee brewing apparatus' coffee bean inlet in such a way that a selected one of the at least one coffee bean container(s) received by the support is capable of being moved, and is moved, into a position suitable for supplying coffee beans upon request;
(d) starting the coffee brewing automated procedure on the coffee brewing apparatus, whereupon
(e) the coffee brewing apparatus requests a supply of a predetermined amount of coffee beans from the detachable coffee bean container received on the support being in the position suitable for supplying coffee beans
(f) to be delivered from the coffee bean container's housing inner volume via the coffee bean container's coffee bean guiding passageway and passing the coffee bean container's bottom side opening closure;
(g) said coffee beans from the coffee bean container being supplied to the coffee brewing apparatus' coffee bean inlet; and
(h) delivered via the coffee brewing apparatus' coffee bean passageway to the coffee bean grinding means or mill and further to the coffee brewing apparatus' coffee brewing unit;
(i) receiving a coffee beverage at the coffee brewing apparatus' brewed coffee beverage outlet; and optionally
(j) disconnecting the detachable coffee bean container connected to said support in step (c) from said support or leaving it connected for further coffee brewing steps; and optionally
(k) selecting a second or even further detachable container(s) as described below in more detail and storing and holding a type of coffee beans different from those stored and held by the first detachable container, connecting said second or even further detachable container(s) to the coffee brewing apparatus' coffee bean container support in a manner that one of said second or even further container(s) received by the support is capable of being moved, and is moved, into a position suitable for supplying coffee beans upon request to the coffee brewing apparatus' coffee bean inlet and starting the coffee brewing automatic procedure on the coffee brewing apparatus with steps (d) et seq. above.

The invention is now described in detail while referring to preferred embodiments, which are also shown in the Figures. However, when referring to those preferred embodiments and to the Figures, the invention should not be construed to be restricted to these preferred embodiments or to those embodiments shown in the Figures: Those preferred embodiments described and/or shown in the Figures are presented as examples of embodiments of the invention serving a better understanding thereof.

In the Figures,
Figure 1A shows a reproduction of a detachable coffee bean container for storing, holding and supplying coffee beans, in accordance with a preferred embodiment of the invention;
Figure 1B shows a reproduction of another detachable coffee bean container for storing, holding and supplying coffee beans, in accordance with another preferred embodiment of the invention;
Figure 2 shows an exemplary embodiment of a prior art conventional automated coffee brewing apparatus;
Figure 3 shows a flow sheet of a prior art conventional coffee brewing procedure, especially including those apparatus parts conventionally included into said brewing procedure;
Figure 4A shows one embodiment of a detachable coffee bean container of the invention capable of being connected to the coffee bean inlet of a coffee brewing apparatus;
Figure 4B shows another embodiment of a detachable coffee bean container of the invention capable of being connected to the coffee bean inlet of a coffee brewing apparatus;
Figure 4C shows the detailed structure of the closure of the embodiment of a detachable coffee bean container of the invention shown in Figure 4A;
Figure 5A shows a detachable coffee bean container capable of being connected to the coffee bean inlet of a coffee brewing apparatus;
Figure 5B shows a detachable coffee bean container of Figure 5A secured to the coffee brewing apparatus' coffee bean inlet;
Figure 6 shows a detachable coffee bean container capable of being connected to the coffee bean inlet of a coffee brewing apparatus;
Figure 7 shows a further embodiment of a detachable coffee bean container of the invention capable of being connected to the coffee bean inlet of a coffee brewing apparatus (shown in an upside-down position, i. e. with bottom-side opening, covered with a protecting cap, to the upper side) and having an additional lid or cap for a refill with freshly roasted coffee beans on an upper side (showing down in the Figure);
Figure 8 shows another embodiment of a detachable coffee bean container of the invention capable of being connected to the coffee bean inlet of a coffee brewing apparatus (shown in an upside-down position, i. e. with bottom-side opening to the upper side and covered with a protecting cap 145) and having a seal 146 applied to the coffee bean outlet;
Figure 9A shows an embodiment of a support for plurality of coffee bean containers, which support is to receive several (in the embodiment shown: four) coffee bean containers of the invention, on the one hand, and is to be connected to the coffee brewing apparatus' coffee bean inlet, on the other hand;
Figures 9B and 9C show the structure of the coffee bean container's bottom side opening and its closure 161 to cooperate with the support's coffee bean passage and closure actuated by the coffee brewing apparatus' actuation means as, for example, its actuation rod;
Figure 10 shows an exemplary embodiment of the arrangement, in a coffee brewing apparatus, of the coffee mill relative to its driving means; and
Figure 11 shows another exemplary embodiment of the arrangement, in a coffee brewing apparatus, of the coffee mill relative to its driving means.

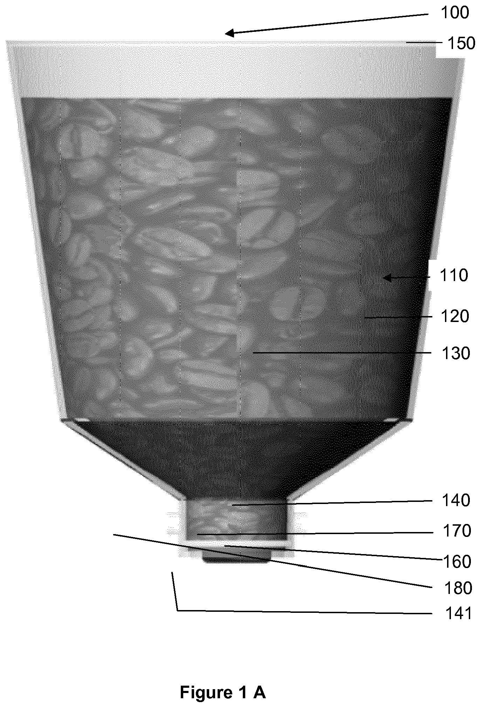

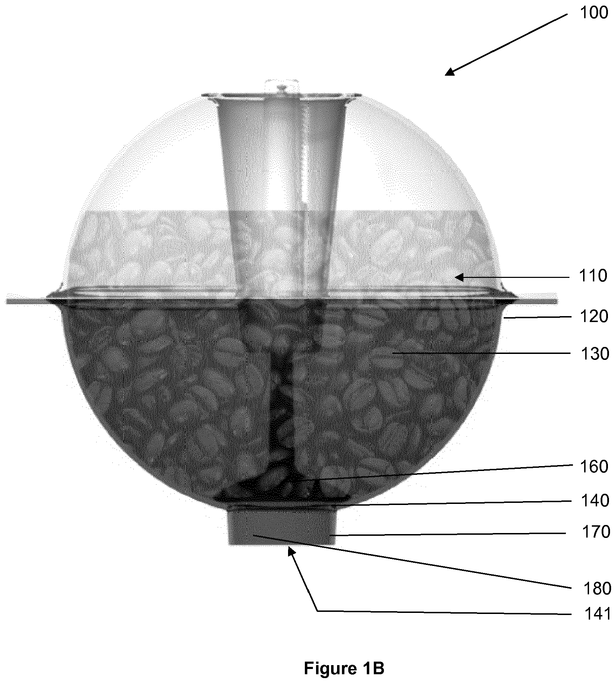

Reference is now made to Figures 1A and 1B, which show exemplary detachable coffee bean containers 100 of the present invention. In accordance with the invention, the detachable coffee bean container 100 has, inter alia, the purposes of storing, holding and supplying coffee beans.

The term "coffee beans" as used in the present specification and claims is understood to mean roasted or burnt coffee beans. Coffee beans as addressed in the specification and claims are understood to include whole (roasted) coffee beans and fragments of coffee beans intentionally or unintentionally obtained from whole roasted coffee beans, which fragments still have to be ground before being suitable for brewing coffee. In accordance with this meaning, fragments of coffee beans do not include coffee grounds.

The detachable coffee bean container 100 of the present invention may be used for any purpose a skilled person may conceive of, without restricting the invention. It is particularly useable for the purposes of storing, holding and supplying coffee beans.

In the present claims and in the specification, the term "storing coffee beans" is understood to mean that coffee beans are present within the inner volume 130 of the housing 110 of the detachable container 100 for an extended period of time, without that their properties, e. g. their flavor, their taste and their mechanical properties, are deteriorated in the course of the time. This is to be achieved, and in accordance with the invention is achieved, to an extent at least as in any purchasable coffee bean package containing coffee beans for brewing fresh coffee from freshly ground coffee beans. The term "storing coffee beans" may also include a storage of coffee beans, within said detachable coffee bean container 100 of the invention, immediately after the process of roasting said coffee beans, extending to the period of shipping said roasted coffee beans contained within said detachable container to any sales location and, finally, to the consumer. The term "storing coffee beans" is meant to also cover time periods at the consumer's place until to a complete consumption of all coffee beans contained in inner volume 130 of the coffee bean container's housing 110.

In accordance with the invention, after having been emptied the detachable coffee bean container 100 completely, it might be refilled with fresh roasted coffee beans according to the user's choice, instead of discarding the empty container 100. Keeping these refill coffee beans stored within the container is also covered by the term "storing coffee beans".

Similarly, the term "holding coffee beans" as used in the specification and claims is considered to mean the action of mechanically holding coffee beans within the space or inner volume 130 provided by the at least one outer container wall 120. Hence, the term "holding" is understood to mean the maintenance of a physical presence of the coffee beans within the space or inner volume 130 created by the at least one outer container wall 120.

Hence, the term "holding coffee beans" is the opposite term to the above third term "supplying coffee beans": The latter, in accordance with the present invention, is understood in the present specification and claims to mean that coffee beans held within the coffee bean container's space or inner volume 130 surrounded by the at least one outer container wall 120 are delivered or supplied to the outside of the detachable coffee bean container 100 for further treatment (described in detail below) and, finally, to a coffee brewing apparatus 200 for brewing a coffee beverage.

In accordance with the present invention, the term "coffee brewing apparatus" (bearing the reference numeral "200" where addressed in the Figures and in the present specification and claims) is understood in the present specification, claims and Figures to mean an apparatus capable of brewing coffee as a hot coffee beverage from freshly ground coffee beans, i. e. from coffee grounds freshly prepared, and from hot water in an automated manner. Hence, said term includes (but is not restricted to) coffee brewing machines where coffee is ground, after being supplied to the machine, and the coffee grounds are fed to a conventional exchangeable paper filter or polymer mesh filter or metal sieve filter, on which the coffee grounds are flooded with hot water. The term "coffee brewing apparatus", as meant in the present specification and claims, also includes (but is not restricted to) a fully automated coffee brewing apparatus receiving coffee beans from any coffee bean container, usually an apparatus-connected coffee bean container, and delivering the coffee beverage (and as a discardable material: the depleted coffee grounds amount) in a fully automated manner and in a few seconds through a pressure-initiated contact of the eluting water to the coffee grounds. Furthermore, the term "coffee brewing apparatus" includes apparatus capable of brewing coffee for professional use (e.g. continuously in large amounts of single - large or small - coffee beverage portions over an extended period of time) or for private household use (e. g. intermittently in small amounts of - usually small - coffee beverage portions a few times a day, only).

The term "coffee beverage", as used in the present specification and claims is understood to broadly mean all beverages consisting of, or comprising, the product of an elution of coffee grounds with warm or even hot water under normal (i. e. atmospheric) water pressure or by applying increased water pressure. Hence, the term "coffee beverage" may include, but is not restricted to, coffee (in the usual sense), espresso, cappuccino, Latte macchiato, Greek coffee, Cafe Americano, "Vienna Melange" and further coffee beverage specialties.

The terms "coffee" and "coffee beverage" are used in the present specification and claims synonymously, often.

In accordance with the present invention and as shown in Figures 1A and 1B, the detachable coffee bean container 100 comprises, as one of its elements, a housing 110 having at least one outer wall 120 defining an inner volume 130 or space of the housing 110 and being capable of storing and holding coffee beans.

The housing 110 may make up, in preferred embodiments of the invention, the major part of the detachable coffee bean container 100. This is in accordance with one of the purposes of the housing 110, i. e. the purpose of forming a container for storing freshly roasted coffee beans as a storage vessel for purchasable amounts of coffee beans of, for example 250 g or 500 g or even 1000 g of coffee beans. Hence, the size of the housing 110 being a component of the detachable coffee bean container 100 of the present invention is freely selectable by a skilled person and may be adapted to the amount of coffee beans to be stored in accordance with the facts of a single case.

The shape of the housing 110 of the coffee bean container of the invention may be any shape conceivable by a skilled person in this technical field and may be selected freely. The invention does not pose any restriction to the selection of the housing's shape. Advantageous and, thus, preferred shapes may be selected from the group consisting of a substantially cubic shape, cuboid shape, tubular or cylindrical shape, spherical shape, ellipsoidal shape, tetrahedral shape, conical shape and pyramidal shape as well as shapes similar to those shapes, including combinations thereof. The latter may include a housing 110 having a substantially cuboid, conical, cylindrical, spherical or ellipsoidal shape, preferably a conical or spherical shape (as shown in Figures 1A and 1B), and passing into a bottom-side conical shape, advantageously moving the coffee beans to a bottom-side coffee bean outlet 140 by gravity, as in a funnel. The invention is however, not restricted to any of the shapes mentioned above as examples.

In accordance with the invention, and as shown in Figures 1A and 1B, said housing 110 has at least one bottom side opening 140 defining a coffee bean outlet 141 capable of supplying coffee beans stored and held within the inner volume 130 to the outside of the housing 110.

The term "bottom side opening" in the specification and claims is understood to mean an opening in one (or in the one) wall 120 of said housing 110 defining the housing's inner volume 130 and facing (in operation of the detachable coffee bean container 100) towards to lower side of the container's housing 110 and preferably means an opening located at the lowest wall part of the housing 110. This is advantageous in accordance with the invention, because the coffee beans within the inner housing volume 130 may relatively easily move to said bottom side opening 140 by gravity so as to be prepared for being supplied to the outside of the housing 110 subsequently.

The material of which the housing 110 of the detachable coffee bean container 100 may be any material a skilled person may conceive of when considering the circumstances of the case. No restriction is imposed on a skilled person when selecting the material of the housing, as long as the purposes of storing, holding and supplying coffee beans can be met.

One of the pivotal features of the invention is that the material of the housing 110 of the coffee bean container can be used as a package filled with coffee beans of a certain blend of coffee beans desired by the users and offered for purchasing, with the aim of being connected to a commercial or household coffee brewing apparatus for supplying coffee beans for brewing coffee beverages. Ideally, an empty coffee bean contained should be discarded (or recycled) or alternatively be refilled with the desired type of coffee beans. Hence, the material should be one which allows to comply with all requirements mentioned above, including allowing to connect the detachable coffee bean container 100 to a commercial or household coffee brewing apparatus 200.

In further preferred embodiments of the invention, which might be realized alone or in combination with one or several or all other features of the invention, said housing 110 is made of a disposable material. Such disposable materials are well-known to a skilled person and may be selected from a variety of disposable materials in accordance with the requirements of a single case. Examples thereof (without restriction to those) are materials based on cardboard, optionally coated with any natural or synthetic or natural, but synthetically modified pliable organic plastic polymer or with a metal, e. g. a thin metal foil, on either one (e. g. the inner) or on both sides, and also multi-layer composites, optionally also including cardboard, of metal foils and organic plastic polymer films. Advantageously, in use, such materials can form a stable housing 110 of a coffee bean container and may protect the coffee beans during transport and storage against impacts (resulting into a fragmentation of the coffee beans), against leaking out of the container and against a loss of flavor or a receipt of an undesired taste upon environmental influences. Moreover, after use, such a material can be discarded directly or, if polymer-coated or metal-coated, can be easily separated into the polymer layer or the metal layer and its cardboard support and, as such, can be discarded separately for separate recycling.

In further preferred embodiments of the invention, which might be realized alone or in combination with one or several or all other features of the invention, said housing 110 is made of a self-supporting disposable material. Such self-supporting materials are well-known to a skilled person and may be selected from a variety of self-supporting disposable materials in accordance with the requirements of a single case. Examples thereof (without restriction to those) are materials providing the housing 110 of the detachable coffee bean container 100 with a structure sufficiently stable against impact from the outside during transport and storage as well as when intermediately stored on a stand support and smooth fitting to the coffee brewing apparatus 200 if attached to it during use. Examples of such materials (without restricting the invention to those) are cardboard-based materials, optionally coated with any natural or synthetic or natural, but synthetically modified pliable organic plastic polymer or with a metal, e. g. a thin metal foil, on either one (e. g. the inner) or on both sides, and also multi-layer composites, optionally also including cardboard, of metal foils and organic plastic polymer films. Advantageously, in use, such materials can form a stable and self-supported housing 110 of a detachable coffee bean container 100 and may prevent the housing 110 of the detachable coffee bean container 100 from collapsing, thereby protecting the coffee beans during transport and storage against impacts (resulting into a fragmentation of the coffee beans), against leaking out of the container and against a loss of flavor or a receipt of an undesired taste upon environmental influences.

In even more preferred embodiments of the invention, which might be realized alone or in combination with one or several or all other features of the invention, said housing 110 is made of a self-supporting disposable and gas-tight material. Such gas-tight materials, generally for food, and especially for coffee beans, are well-known to a skilled person and may be selected from a variety of gas-tight materials in accordance with the requirements of a single case. Examples thereof (without restriction to those) are materials comprising, or consisting of one or more film layers of (e. g. stretched) synthetic polymers or of one or more metal foils, such materials having a sufficiently dense structure free of pores or having sufficiently small pores to prevent gas molecules from passing the polymer or metal layer. Such structures are capable of preventing gases (e. g. air, oxygen, water vapor), but also gaseous molecules of flavor- and taste-maintaining substances and/or flavor- and taste-deteriorating substances to pass said multi-layer barrier. Advantageously, in use, such materials guarantee the maintenance of the coffee beans' flavor and taste and prevent the coffee beans' flavor and taste from being deteriorated, after the step of roasting the coffee beans and before the step of supplying the coffee beans to the grinding step in the coffee brewing apparatus 200.

In further preferred embodiments of the invention, which might be realized alone or in combination with one or several or all other features of the invention, said housing 110 is made of a self-supporting, disposable and gas-tight material, thereby realizing all advantageous effects mentioned in the previous paragraphs. A skilled person may effect the simultaneous realization of the above requirements by suitably selecting the materials for the housing 110 from those mentioned especially above and, at least in part, known to a skilled person.

In even more preferred embodiments of the invention, which might be realized alone or in combination with one or several or all other features of the invention, said housing 110 is made of a self-supporting disposable and gas-tight material capable of being used as a marketable coffee bean package. The latter additional property requires, *inter alia,* that the material used for the housing 110 of the detachable coffee bean container 100 be suitable for being printed on its outer layer with usual product information needed by the user when purchasing the container 100 comprising the housing 110 and containing coffee beans of the user's choice. Such materials capable of being provided with required user information are well-known to a skilled person and may be selected from a variety of such materials in accordance with the requirements of a single case. Examples thereof (without restriction to those) include polymer materials, especially drawn polymer film materials, and metal films of small thickness, as well as other materials known to a skilled person.

It is further mentioned that further particularly preferred embodiments of the materials for the housing 110 of the detachable coffee bean container 100 of the invention, which might be realized alone or in combination with one or several or all other features of the invention, relate to an embodiment wherein said housing 110 is made of a self-supporting, disposable and pliable gas-tight material capable of being used as a marketable coffee bean package. Such gas-tight materials, generally for food, and especially for coffee beans, are well-known to a skilled person and may be selected from a variety of pliable materials in accordance with the requirements of a single case. Examples thereof (without restriction to those) are materials comprising, or consisting of one or more film layers of (e. g. stretched) synthetic polymers or of one or more metal foils, or plural layer combinations thereof, which materials, i. e. organic natural or synthetic or natural, but synthetically modified polymers or metals or metal alloys, eventually strengthened with materials like cardboard or similar materials mentioned above, a skilled person may select from a variety of materials known per se. Advantageously, in use, such pliable materials, although maintaining a stiff and stable structure, may be folded or bent in order to reduce the volume of the housing 110 of the detachable coffee bean container 100, once a first, second and even third supply of coffee beans to the outside of the housing 110 was effected, thereby creating empty space which will be filled with air. Such empty air space will allow coffee bean flavor and taste molecules to escape from the coffee bean body into the air-filled space, thereby depleting the coffee beans from molecules being the basis for the flavor and taste. This can be prevented by making the empty air-filled space as small as possible. Reducing the housing's inner volume 130 by folding the housing 110 with the aim of reducing the empty air-filled space above the coffee beans may considerably contribute to maintaining high quality coffee beans for the subsequent grinding and coffee brewing steps.

In further preferred embodiments of the invention, which might be realized alone or in combination with one or several or all other features of the invention, said housing 110 further comprises an opening 150 defining a coffee bean inlet capable of being fed with coffee beans to be stored and held within the inner volume 130 of the housing 110 and preferably sealable with a suitable seal preventing an unintentional opening operation of said opening 150. This embodiment of the invention is applied in cases where the coffee bean container housing 110 is intended not to be discarded after having supplied all coffee beans contained therein to a subsequent grinding step on the coffee brewing apparatus 100 and, hence, after having emptied said housing completely. Instead of discarding the whole coffee bean container 100 including the housing 110, the inner volume 130 of the coffee bean container's housing 110 is capable of being refilled with newly purchased coffee beans, according to the user's taste, through said opening 150.

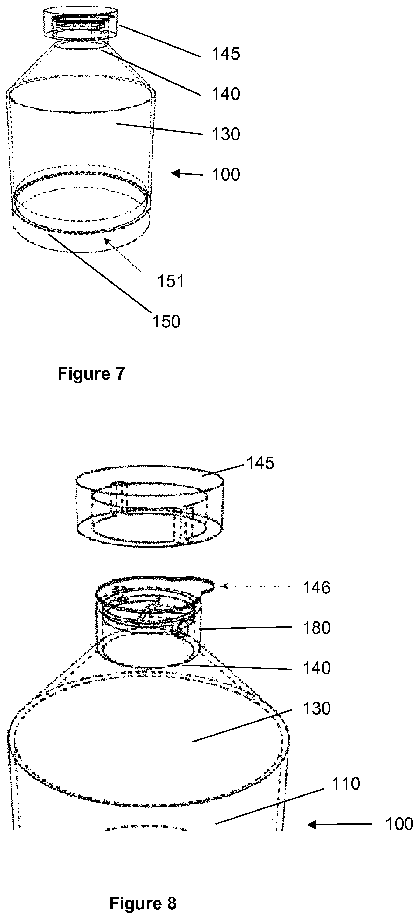

In a preferred embodiment of the invention, which is shown in Figures 1A and 7 and which might be realized alone or in combination with one or several or all other features of the invention, said opening 150, if available in accordance with the preferred embodiment of the invention, is closeable with a closure or cap or lid 151 which might be provided with a suitable seal in order to prevent any coffee beans to be released from the housing 110 or to prevent any flavor / taste-related molecules from leaking out of the housing 110 of the detachable coffee bean container 100. After refilling the inner volume of the housing 110 with fresh coffee beans according to the user's taste, the closure/cap/lid 151 is again applied to the opening 150. Also a seal might be applied again to keep the coffee beans fresh and good in flavor and in taste. By this feature, additional garbage in the form of the emptied coffee bean container housing 110 is prevented from being generated, thereby saving costs and preventing environmental pollution.

In an alternative, albeit also preferred embodiment of the invention, which might be realized alone or in combination with one or several or all other features of the invention, said housing 110 is capable of being refilled with coffee beans to be stored and held within the inner volume 130 of the housing 110 on a different route: The at least one bottom side opening 140 defining a coffee bean outlet 141 is constructed in a manner so as to be capable of receiving coffee beans to be stored and held within the inner volume 130 of the housing 120. The construction of the at least one bottom side opening 140 required for said purpose is not restricted, and a skilled person knows how to construct said at least bottom side opening 140 for the purpose of being supplied with fresh roasted coffee beans according the user's wish, and may select such a construction in accordance with the requirements: One of the criteria to be observed may be the position of said at least one bottom side opening: A refill of coffee beans from a different storage container may be effected easily if the "at least one bottom side opening 140" at the detachable coffee bean container 100 of the invention can be turned upside down, thereby bringing the at least one bottom side opening to the upper side of the container 100 with the opening hole showing to the upper side: A refill of coffee beans will be effected simply by gravity and by accurately targeting the coffee beans through the hole, optionally using a funnel or similar filling aid to facilitate the passage of coffee beans through the hole of the opening 140. Instead, the coffee beans may be filled through a tubing receiving coffee beans from a storage container and emptying into the open hole. Other refilling procedures may be available.

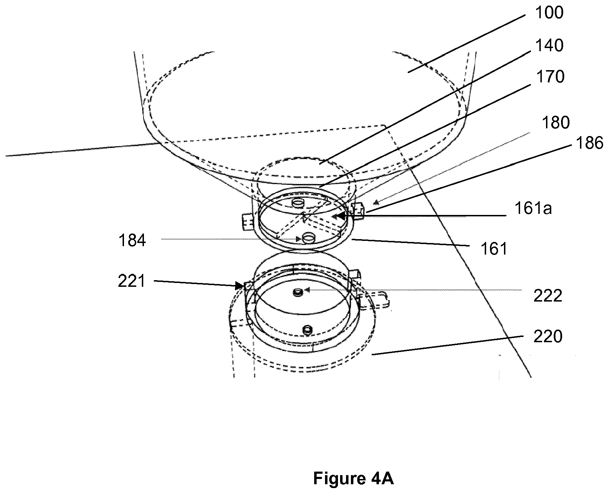

Furthermore, in accordance with the invention, the detachable coffee bean container 100 of the invention comprises a closure 160 exterior to said bottom side opening 140 of said housing 110 and capable of closing said bottom side opening 140 against, or transiently opening it for, a passage of coffee beans to the outside of the housing 110. The closure 160 as a component of the detachable coffee bean container 100 of the invention is now described by referring to Figures 4A, 4B, 4C, 5A, 5B and 6.

As mentioned above and shown already in Figures 1A and 1B, the housing 110 of the detachable coffee bean container 100 of the present invention has at least one bottom side opening 140. There may be present one bottom side opening, or there may be two, three or even more, e. g. four, bottom side openings. In a preferred embodiment of the invention, which might be realized alone or in combination with one or several or all other features of the invention, there is exactly one bottom side opening 140, which is located preferably at the lowest part of the bottom side of the coffee bean container's housing 110.

In accordance with the invention, the closure 160 is located exterior to said bottom side opening 140. Said closure 160 is capable of closing the bottom side opening 140 against a passage of coffee beans through the bottom side opening 140 to the outside of the housing 110. This is relevant in the whole time period from filling the container 100, i. e. the inner volume 130 of its housing 110, with freshly roasted coffee beans until to the step of matching the detachable coffee bean container 100 including its housing 110 to a coffee brewing apparatus 200. Particularly, this is relevant in the whole period of storing the coffee beans within the inner volume 130 of the coffee bean container's housing 110, shipping the coffee beans within said container to the sales point where the package is offered to the consumer for a purchase, transporting the coffee beans from the sales point to the user's home and storing the package, even if already broached.

Before the first supply of coffee beans to the coffee brewing apparatus, the coffee bean outlet 140 is sealed with a suitable additional seal 146 (shown in Figure 8). This additional seal 146 does not only serve to control whether the package is still not broached at the time of purchase. The seal also contributes to keep the coffee beans fresh and at good flavor and taste by preventing any gas exchange between the inner volume 130 of the coffee bean container's housing 110 and the environment, thereby allowing the user advantageously to enjoy the full flavor and taste of the coffee beverage of his choice after brewing. The cap 145 can be fixed back to the coffee bean outlet 140 after each step of supplying coffee beans from the detachable coffee bean container 100 to the coffee brewing apparatus 200 and removing the container 100 from the connection to the coffee brewing apparatus 200.

Alternatively, after a step of supplying coffee beans to the brewing apparatus 200, as described in detail below, one coffee bean container 200 may be replaced by another coffee bean container 200 containing a different type of coffee beans for supplying a different type of coffee beans according to the user's choice. The second detachable coffee bean container 100 is taken from a suitable stand for a plurality of coffee bean containers not connected to the coffee brewing apparatus 200, while the first detachable coffee bean container 100 is deposited to said stand.

On the other hand, the closure 160 is capable of transiently opening the coffee bean container's bottom side opening 140 for a passage of coffee beans to the outside of the housing 110.

In preferred embodiments of the invention, which might be realized alone or in combination with one or several or all other features of the invention, and as will be described below in the process part of the specification, the closure 160 capable of transiently opening the bottom side opening 140 defining the coffee bean outlet capable of supplying coffee beans stored and held within the inner volume 130 of the container's housing 110 is capable of being actuated and controlled by the coffee brewing apparatus 200, automatically.

In another preferred embodiment of the invention, which is given exemplarily and should not be construed to restrict the invention, an automatic actuation and control of the closure's action of closing said bottom side opening 140 against, or transiently opening said bottom side opening 140 for, a passage of coffee beans is effected upon receiving an electronic signal from the coffee brewing apparatus 200. Such an electronic signal, in turn, is sent by the coffee brewing apparatus 200 upon the user's actuation of a request that a coffee brewing process be started by receiving coffee beans via the coffee brewing machine's coffee bean inlet 220 from that detachable coffee bean container 100 which actually is connected to the coffee brewing apparatus 200 due to the user's wish of brewing coffee from that particular type of coffee beans held by the container connected. The electronic signal is capable of opening the closure 160 transiently for allowing a certain amount of coffee beans to pass the coffee bean container's bottom side opening 140 and to enter the coffee brewing apparatus' coffee bean inlet 220 for being ground, and thereafter supplied as coffee grounds to the coffee brewing apparatus' coffee brewing unit 260. This is advantageous, because the technical requirements of the detachable coffee bean container 100 of the invention can be kept on a relatively low level, while relying on the - available - equipment provided by the coffee brewing apparatus 200:
As soon as the detachable coffee bean container 100 is connected to the coffee brewing apparatus 200 via the adapter 180 capable of matching the coffee bean container's coffee bean passageway 170 to the coffee brewing apparatus' coffee bean inlet 220, the route for a passage of coffee beans from the detachable coffee bean container 100 of the invention to the coffee brewing apparatus 200 is substantially aligned.

However, the route - although aligned - is still closed at least by the closure 160 of the detachable coffee bean container 100 preventing coffee beans from being supplied to the coffee brewing apparatus 200. As soon as actuated by the electronic signal received from the coffee brewing apparatus 200, the closure 160 is opened transiently for allowing the container 100 of the invention to supply a predetermined and metered amount of coffee beans to the coffee brewing apparatus' coffee bean inlet 220. The amount of coffee beans supplied is predetermined by the user via the coffee brewing apparatus 200 and may be measured by means of the volume of coffee beans supplied or by the time of opening the closure for a passage of coffee beans, or by different means.

In an alternative - and likewise preferred - embodiment of the invention, which might be realized alone or in combination with one or several or all other features of the invention, the closure 160 is capable of being actuated and controlled by the user, manually. In an exemplary embodiment of the invention, which should not be construed to restrict the invention, this manual actuation - or deactivation - of the closure 160 by the user may be effected by the user's manual actuation of a lever or arm on the outer side of the coffee bean container's closure 160. This is advantageous, because the user might actuate - and deactivate - and control the passage of coffee beans along the aligned route of his/her own volition, e. g. when wanting to influence the strength of the coffee to be prepared by increasing or decreasing the amount of coffee beans supplied to the coffee brewing step.

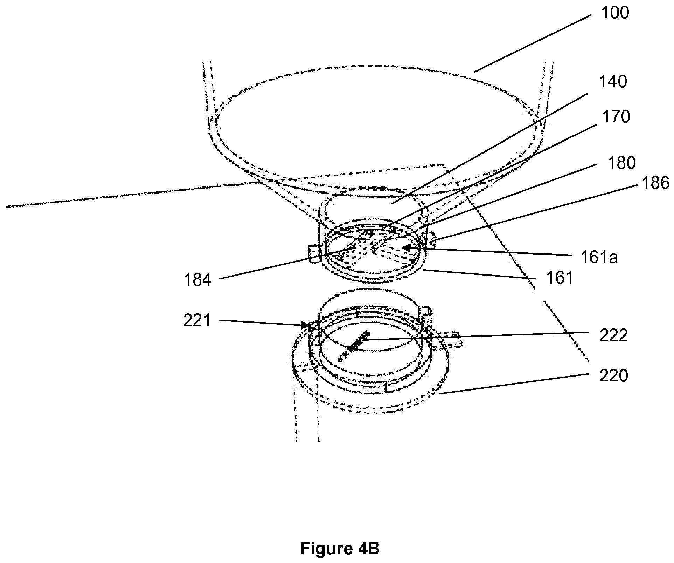

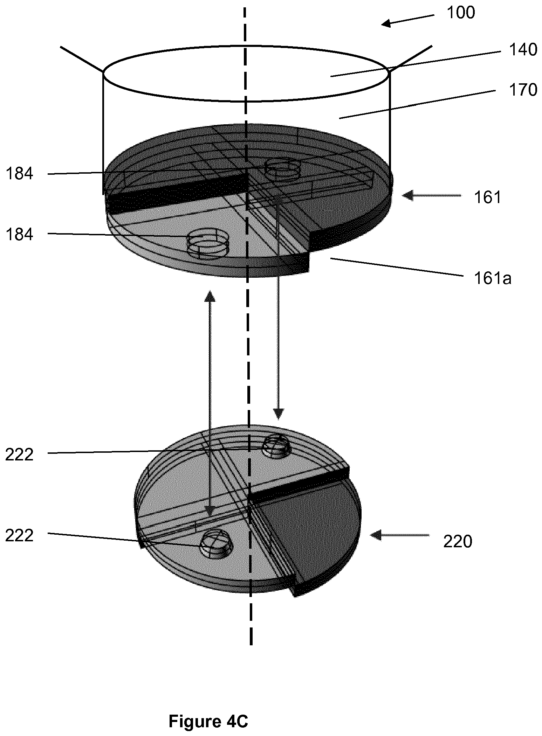

In further preferred embodiments of the invention, which might be realized alone or in combination with one or several or all other features of the invention, said closure 160 is capable of being actuated for closing or opening said bottom side opening 140 of the housing 110 by one mechanism selected from the group consisting of rotating the closure 160, sliding the closure 160, buckling the closure 160, lifting the closure 160, lowering the closure 160 and combinations thereof. These embodiments are now explained in more detail while referring to Figures 4A, 4B and 4C to 6.

In one exemplary embodiment shown in Figures 4A, 4B and 4C exemplarily, by which the invention is explained for a better understanding thereof, but which should not be construed to restrict the invention, the closure 161 is capable of being actuated for opening or closing said bottom side opening 140 of the housing 110, for allowing a predetermined amount of coffee beans to pass, or for preventing coffee beans from passing, the closure 161, by a mechanism of rotating the closure 161 automatically (e. g. actuated by the coffee brewing apparatus 200) or manually (e. g. actuated by the used manually). Of course, other mechanisms and means (instead of a rotating closure 161) may be used, as will be appreciated by a skilled person in this technical field.

As soon as the user has made his/her selection of which type of coffee beans (packed into and stored in and held by a certain detachable coffee bean container 100 according to the invention) should be used for brewing a desired coffee beverage, a container 100 holding such coffee beans is connected to the coffee brewing apparatus 100 for the supply of a predetermined amount of coffee beans to the coffee brewing apparatus' coffee bean inlet 220. This is effected (as described in more detail below) by means of the coffee bean container's adapter 180 which is capable of matching the coffee bean container's coffee bean passageway 170, and thereby the detachable coffee bean container 100 of the invention, to the coffee bean inlet 220 of the coffee brewing apparatus 200.

As soon as the connection is accomplished, the coffee bean container's closure 160 confining the passageway 170 capable of guiding coffee beans released from the coffee bean container's housing 110 to the outside of the detachable coffee bean container 100, e. g. into the coffee bean inlet 220 of the coffee brewing apparatus 200, is in close proximity to the coffee brewing apparatus' coffee bean inlet 220. Ideally, i. e. in a particularly preferred embodiment (not restricting the invention), the distance between the closure, on the coffee bean container's side on the one hand, and the coffee brewing apparatus' coffee bean inlet 220 on the other hand, is less than the smallest diameter of a coffee bean or of a fragment thereof, even more preferably is a distance of ≤ 1 mm. This is in order to prevent coffee beans or fragments thereof from blocking the mutual operation of the coffee bean container's closure 160 and the coffee brewing apparatus' coffee bean inlet 220 in the step of supplying a metered amount of coffee beans from the detachable coffee bean container 100 of the invention to the conventional coffee brewing apparatus 200.

As soon as the connection step is completed, the route for a passage of coffee beans from the detachable coffee bean container 100 of the invention to the coffee brewing apparatus 200 is substantially aligned. However, the route - although aligned - is still closed at least by the closure 160 on the side of the detachable coffee bean container 100, and preferably also by the corresponding coffee bean inlet 220 on the side of the coffee brewing apparatus 200, the two of the closures still preventing coffee beans from being supplied from the detachable coffee bean container 100 of the invention to the coffee brewing apparatus 200.

Upon receiving an opening order signal from the coffee brewing apparatus 200 (after the user started the coffee brewing process by pressing the relevant key), the closure 160 of the detachable coffee bean container 100 of the invention, which is, for example (and without restriction) in the shape of a flat circular disk closure 161 having a sectoral opening for allowing coffee beans to pass, is actuated by rotating around an axis parallel to the coffee supply direction from the detachable coffee bean container 100 to the coffee brewing apparatus' coffee bean inlet 220. For example, the flat circular disk closure 161 having a sectoral opening is rotated by a certain angle of rotation, so as to bring said sectoral opening, e. g. an opening covering one quarter of the surface of the circular disk closure 161 or covering one half of the surface of the circular disk closure, to congruence with a corresponding opening at the coffee brewing apparatus' coffee bean inlet.

In an exemplary (but not restricting) embodiment of the invention, which may be realized alone or together with one or several or all of the other features of the invention, the closure 160 of the detachable coffee bean container 100 of the invention is actuated to be opened simultaneously with the step of connecting to the coffee brewing apparatus 100, e. g. to the coffee brewing apparatus' coffee bean inlet 220, with the aim of making the detachable coffee bean container 100 ready for supplying a predetermined amount of coffee beans to the coffee brewing apparatus' coffee bean inlet 220 already at the time of closing the connection.

This is effected (as described in more detail below) by means of the coffee bean container's closure 160 capable of closing said at least one bottom side opening 140 of the container's housing 110 against, or transiently opening it for, a passage of coffee beans, and the container's adapter 180 capable of matching the coffee bean container's coffee bean passageway 170, and thereby the detachable coffee bean container 100 of the invention, to the coffee bean inlet 220 of the coffee brewing apparatus 200. As soon as said matching step is performed, e. g. by approaching the container's adapter 180 to, and locking it into, the coffee brewing apparatus' coffee bean inlet 220 by (for example, but not restricting) the adapter's quick release fastener, by a circular movement by e. g. 90 ° in the plane of the contacting parts of the adapter 180, on the one hand, and of the coffee bean inlet 220, on the other hand, the circular disk closure 161 opens with said circular movement, thereby enabling coffee beans to pass the container's passageway 170.

Of course, instead of the above quick release fastener, the coffee bean container's adapter 180 may also be provided with a screw closure capable of connecting the detachable container 100 of the invention to the coffee brewing apparatus' coffee bean inlet 220. As a skilled person will appreciate, the "male" screw closure part may be on the detachable container's side, while the "female" screw closure part is on the coffee bean inlet's side, or the other way around.

In accordance with the invention and as shown in Figures 4A, 4B and 4C, said step of simultaneously connecting, fixing and locking the detachable container's adapter 180 to the coffee brewing apparatus' coffee bean inlet 220 and opening the detachable coffee bean container's at least one bottom side opening 140 defining the coffee bean outlet is effected by (i) approaching the detachable coffee bean container's closure 161 (which is, for example, in the shape of a circular disk having a sectoral opening for allowing coffee beans to pass, as exemplified above) and adapter 180 to the coffee brewing apparatus' coffee bean inlet 220; (ii) inserting the adapter's tongues 186 into the coffee bean inlet's grooves 221, thereby preparing them for the locking step, by the adapter's quick release fastener matching to the coffee bean inlet 220; (iii) inserting at least one protrusion 222, on the coffee bean inlet side, into at least one recess 184, on the coffee bean container's side and opposite to said at least one protrusion 222; and (iv) performing a circular movement of the coffee bean container 100, in a plane parallel to the coffee bean container's closure 161 in its closed position, by an angle of, for example, 90 °. Of course, the angle of the movement may be different from 90 °; a skilled person may select the angle in accordance with the requirements of a single case, e. g, dependent upon the size and shape of the sectoral opening of the circular disk enabling coffee beans to pass from the detachable container 100 of the invention to the coffee brewing apparatus' coffee bean inlet.

By said circular movement of the coffee bean container 100, the coffee bean container's adapter 180 is tightly locked into the coffee bean inlet 220 of the coffee brewing apparatus 200. Simultaneously, due to the engagement of the coffee bean inlet's at least one protrusion 222 into the coffee bean container closure's at least one recess 184, the closure 161 does not follow the coffee bean container's circular movement, but is kept engaged to the coffee bean inlet 220 due to the engagement(s) of protrusion(s) 222 and recess(es) 184; see Figures 4A, 4B and 4C. As a consequence, the closure 161 is moved by the same angle as the circular movement, relative to the coffee bean container's bottom side opening 140, thereby opening the closure's sectoral opening 161a, by which opening step the closure 161 is prepared for allowing coffee beans to pass.

The at least one recess 184 on the detachable container's side, and the at least one protrusion 222 on the coffee bean inlet's side, may be one recess 184 and one protrusion 222 or may be two or several, for example three or four, recesses 184 and protrusions 222, as long as each recess 184 comes into engagement with one protrusion 222. In a preferred embodiment of the invention, the number of recess(es) 184 and protrusion(s) 222 is one or two. These two cases are shown in Figures 4A, 4B and 4C.

Similarly, the shape of recess(es) 184 and protrusion(s) 222 can be selected freely and is not restricted, in accordance with the invention. As exemplary embodiments (not restricting the invention and shown in Figures 4A and Figure 4C), the protrusion(s) 222 may have a circular (e. g. button or knob) shape, while the recess(es) 184 may have corresponding circular (e. g. circlet) shape capable of engagedly receiving said button(s) or knob(s). In an alternative embodiment shown in Figure 4B, the protrusion(s) 222 (Figure 4B shows only one protrusion 222) and recesses 184 (Figure 4B shows only one recess 184) may have longitudinal rod (or longitudinal depression) shape, as long they are arranged immediately opposite to each other.

A skilled person will recognize, too, that, instead of the above embodiment, the recess(es) 184 may be on the coffee bean inlet's side, and the protrusion(s) 222 may be on the coffee bean container's side.

Reference is made to Figure 4C showing the detailed structure of the closure of the embodiment of a detachable coffee bean container of the invention shown in Figure 4A. The upper part of Figure 4C explains the detailed structure of the preferred embodiment of closure 161 explained above to have the shape of a circular disk forming the closure of the coffee bean container's bottom side opening 140 defining a coffee bean outlet comprising the coffee beans' passageway 170. In a preferred embodiment shown in Figure 4C, the closure 161 comprises two disks slidable along each other around a perpendicular axis in both disks' center (dotted line in Figure 4C). The upper disk is peripherally fixed to the inner wall of the coffee bean container's passageway 170, while the lower disk is movable around the axis.

In the embodiment shown in Figure 4C, the disks of closure 161 consist (without restricting the invention to said embodiment) of two circular disks each lacking a quarter of its disk shape. In the step of opening the closure 161 (described in detail below), coffee beans can pass the closure only if the missing quarters of the two disks are one above the other, thereby allowing coffee beans to move downwards, due to gravity, from the coffee bean container's inner volume 130 to the outside.

The lower sliding disk of the closure 161 is provided on its bottom side with at least one (in the embodiment shown in Figure 4C: with two) recess(es) 184 (in the embodiment shown in Figure 4C: with two circlet-shape recesses 184). Preferably, these two circlet-shape recesses 184 are arranged at opposite quarters of the disk, without restricting the invention to said embodiment.

In the embodiment shown in Figure 4C in its lower part, the coffee brewing apparatus' coffee bean inlet 220 is provided with a similar closure element, which - in its preferred embodiment, without restricting the invention to said embodiment - comprises two disks slidable along each other around the perpendicular axis in both disks' center (dotted line in Figure 4C). The upper disk is peripherally fixed to the inner wall of the coffee brewing apparatus' coffee bean inlet 220, while the lower disk is movable around the axis. The latter movement may be actuated automatically by the coffee brewing apparatus 200 upon the user's command or may be actuated manually by the user when starting the coffee grinding and brewing process.

In the embodiment shown in Figure 4C, the disks of the coffee brewing apparatus' coffee bean inlet 220 consist (without restricting the invention to said embodiment) of two circular disks each lacking a quarter of its disk shape. In the step of opening the closure on the coffee bean inlet's side (described in detail below), coffee beans can pass the closure only if the missing quarters of the two disks are one above the other and above those of the detachable coffee bean container 100 at the same time, thereby allowing coffee beans to move downwards, due to gravity, from the outside into the coffee brewing apparatus' coffee bean inlet 220.

The upper sliding disk of the closure on the coffee bean inlet side is provided on its upper side with at least one (in the embodiment shown in Figure 4C: with two) protrusion(s) 222 (in the embodiment shown in Figure 4C: with two knob-shape protrusions 222). Preferably, these two knob-shape protrusions 222 are arranged at opposite quarters of the disk, without restricting the invention to said embodiment.

At the time when the user (as decribed above) selected one detachable coffee bean container 100 holding coffee beans according to the user's preference, said detachable coffee bean container 100 is connected to the coffee brewing apparatus' coffee bean inlet 220. This connecting step is effected by approaching the coffee bean container's bottom side opening 140 defining the coffee bean outlet to the coffee brewing apparatus' coffee bean inlet 220, i. e. (in the preferred (but not restricting) embodiment shown in Figure 4C) approaching the pair of disks of the coffee bean container's closure 161 and the pair of disks of the brewing apparatus' coffee bean inlet 220, as symbolized in Figure 4C by the double arrows between the upper and lower parts of Figure 4C. In the course of said approach, the two knob-shape protrusions 222 engage in the two circlet-shape recesses on the lower side of the closure 161. When the adapter 180 (on the outer side of the closure 161; see Figure 4A) is locked to the coffee brewing apparatus' coffee bean inlet 220, its (fixed) upper disk with the two protrusions 222 engages with the coffee bean container's closure 161, especially with the two recesses 184 on the bottom side of the lower disk of the closure 161.

When the locking step is terminated, e. g. by a movement of the coffee bean container's closure 161 by an angle of 90 ° (in the preferred embodiment shown in Figure 4C: in the counterclock-wise direction), thereby matching the adapter 180 (not shown in Figure 4C) to the coffee brewing apparatus_ coffee bean inlet, the (movable) lower disk of the coffee bean container's closure 161 remains fixed, via its recesses 184, to the (fixed) upper disk of the coffee brewing apparatus' coffee bean inlet 220 and its knob-shape protrusions 222. In contrast, the coffee bean container's closure 161, with its upper disk (fixed peripherally to the inner walls of the closure's passageway 170) moves in the final matching step, together with the coffee bean container 100, by an angle of 90 ° in the counterclock-wise direction, thereby opening the potential coffee bean passage through the sectoral openings of the two disks to the outside of the detachable coffee bean container 100.

However, despite the fact that the sectoral opening of the detachable coffee bean container's closure 161 is already in the "open" position capable of supplying coffee beans from the coffee bean container 100 of the invention to the outside of the container, coffee beans will actually not start passing the passageway 170 towards the coffee brewing apparatus 200, because the coffee beans in the detachable container 100 are still blocked by the closed opening on the coffee brewing apparatus' side, especially the two sectoral openings in the two disks of the coffee brewing apparatus' coffee bean inlet 220, which is/are not opened before the coffee brewing apparatus' coffee bean inlet 220 is requested by the user to do so.

In another (also preferred, but not restricting) embodiment of the invention, which may be realized alone or together with one or several or all of the other features of the invention, the closure 160 of the detachable coffee bean container 100 of the invention is actuated to be opened in a step separate from the step of connecting to the coffee brewing apparatus 100 to the coffee brewing apparatus' coffee bean inlet 220, preferably in a step after the step of connecting to the coffee brewing apparatus 100 to the coffee brewing apparatus' coffee bean inlet 220, with the aim of making the container 100 ready for supplying a predetermined amount of coffee beans to the coffee brewing apparatus' coffee bean inlet 220 at a time after the moment of closing the connection. This may be effected, for example and without restricting the invention, by separate means provided at the container 100 of the present invention or provided at the coffee brewing apparatus 200 which will be exemplified below in detail.

In another further preferred embodiment of the invention by which the invention is explained for a better understanding thereof, but which should not be construed to restrict the invention, the closure 161, when opening the passageway 170 for, or closing the passageway 170 against, a passage of coffee beans, is co-operating with an abutment means operated by the coffee brewing apparatus 200 and abuttingly pressed, and kept abutting by means of the bias of a spring, against the bottom side opening 140 of the detachable container 100, either directly or by mediation of a soft material-type lip 159 or bristle-type material lip 159. Surprisingly, a blocking of the bottom-side opening 140 by coffee beans can be prevented reliably.

The opening on the coffee brewing apparatus' coffee bean inlet side may have the same size as the opening on the coffee bean container's closure side (as shown in Figures 4A, 4B and 4C: a quarter of a circle) or may have a different size, as long as the two adjacent openings can be brought to congruence, thereby opening the aligned route between the detachable coffee bean container 100 and the coffee brewing apparatus 200 for a supply of coffee beans from the former to the latter. As soon as the two openings are brought to congruence to each other, coffee beans can pass from the detachable coffee bean container 100 of the invention to the coffee brewing apparatus' coffee bean inlet 220 for being ground in a subsequent step.

As soon as the preset time has passed (in cases of a time measurement-oriented passing of coffee beans through the rotating closure 160) or the preset amount of coffee beans has entered the coffee brewing apparatus' coffee bean inlet 220 (in cases of a weight amount measurement-oriented passing of coffee beans through the rotating closure 161), or the preset volume of coffee beans has entered the coffee brewing apparatus' coffee bean inlet 220 (in case of a volume amount measurement-oriented passing of coffee beans), or the preset number of coffee beans has entered the coffee brewing apparatus' coffee bean inlet 220 (in case of an counted number measurement-oriented passing of coffee beans, the coffee brewing apparatus 200 may close the opening of the brewing apparatus' coffee bean inlet 220.

In an alternative embodiment, said closure step(s) may be performed manually by the user on either or both of the sides.

In an exemplary (but not restricting) embodiment of the invention, which may be realized alone or together with one or several or all of the other features of the invention, the closing step on the side of the detachable coffee bean container 100 of the invention may be performed, after the closing step on the side of the coffee brewing apparatus' opening, by disconnecting the adapter 180 and the coffee bean guiding passageway 170, and simultaneously operating the closure 160 exterior to the at least one bottom side opening 140, by (for example, but not restricting) turning them in directions contrary to the above-described connecting step by (for example) - 90 °, optionally disengaging the at least one protrusion 222 from the at least one recess 184 and separating them. If doing so, there will not remain a single coffee bean in the space between the container's closure 160, e. g. the disk-shape closure 161, and the coffee brewing apparatus' coffee bean inlet 220. Hence, no coffee bean supplied from the container 100 of the invention is lost (or even discarded), nor is any coffee bean left before (or at) the entrance to the brewing apparatus' coffee bean inlet 220.

Following said closing step, the coffee bean apparatus 100, with its at least one bottom side opening 140, preferably with its one bottom side opening 140 closed by said closure 160, more preferably by said disk-shape closure 161, may remain connected to the coffee brewing apparatus 200, either in the "ON" mode (i. e. prepared to start another sequence of process steps of brewing a coffee beverage and, eventually, subjected to another coffee brewing procedure) or in the "OFF" mode (i. e. switched off), or the detachable coffee bean container 100 may be replaced by a different coffee bean container containing a different type of coffee beans according to the user's choice. With such different detachable coffee bean container 100 connected to the coffee brewing apparatus 200, another coffee brewing procedure may be started in the same way (and employing the same means) as described above.

One major advantage of a detachable coffee bean container 100 comprising a closure 161 in the form of a circular disk is that such a closure 161 is capable of working in a severely restricted space and does not require powerful action to be rotated when being actuated. Moreover, due to the arrangement of the closure disk in close proximity to a corresponding disk (and opening) on the side of the coffee brewing apparatus 200, there is no risk of blocking the movement of the closure disk 161 by coffee beans or fragments thereof, as soon as the coffee bean passageway 170 is closed, after an appropriate amount of coffee beans has passed to the coffee brewing apparatus' coffee bean inlet 220.

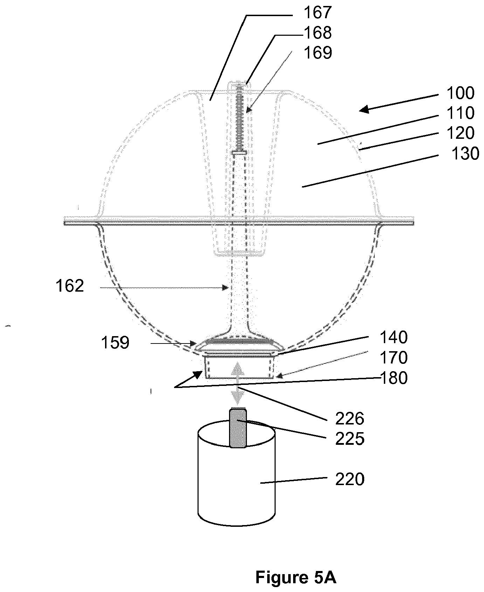

Disclosed is also, and shown in Figure 5A exemplarily, that the closure 162 is capable of being actuated for opening or closing said bottom side opening 140 of the housing 110, for allowing a predetermined amount of coffee beans to pass, or for preventing coffee beans from passing, the closure 162, by a mechanism of moving, preferably lifting the closure 162 automatically (e. g. actuated by the coffee brewing apparatus 200) or manually (e. g. actuated by the user manually). Of course, other mechanisms and means (instead of a slidingly moving or lifting closure 162) may be used, as will be appreciated by a skilled person in this technical field. Reference is now made to Figure 5A.

This embodiment of the invention relies on substantially the same features as those explained above and making use of a circular disk shape closure 161 (and hence can be described in a similar way by referring to parts bearing the same reference numerals), with the exception of the circular disk shape closure 161, which - in this case - is a spherical calotte (or cap) shape closure 162 on the inner side of the container's bottom side opening 140 which is shown in Figure 5A along with a spherical detachable coffee bean container 100 of the invention.

In the same manner as described above, the user has to make his/her selection of which type of coffee beans (packed into and stored in and held by a certain detachable coffee bean container 100 according to the invention) should be used for brewing a desired coffee beverage. Next, a detachable container 100 holding such type of coffee beans has to be connected to the coffee brewing apparatus 100 for the supply of a predetermined amount of coffee beans to the coffee brewing apparatus' coffee bean inlet 220. This is effected (as described in more detail below) by means of the coffee bean container's adapter 180 which is capable of matching the coffee bean container's coffee bean passageway 170, and thereby the detachable coffee bean container 100 of the invention, to the coffee bean inlet 220 of the coffee brewing apparatus 200.

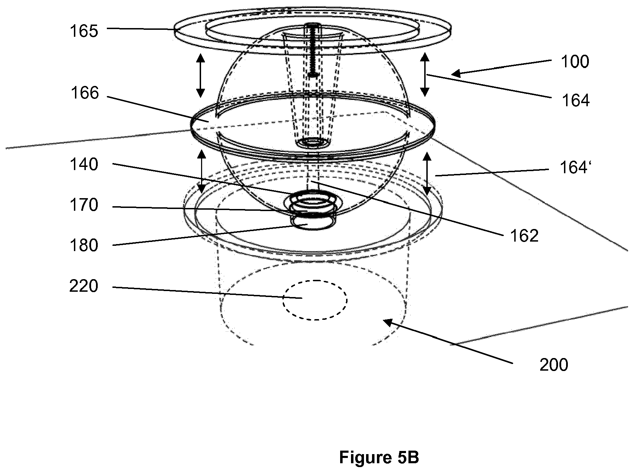

As shown exemplarily, but without restricting the invention, in Figure 5B, a skilled person will know other ways of connecting the detachable coffee bean container 100 to the coffee brewing apparatus 100 and may select those ways in accordance with the requirements of a specific case. For example, the spherical container 100 shown in Figure 5A may be connected to the coffee bean inlet 220 of a coffee brewing apparatus 200 by means of a fixation ring 165 secured to the coffee brewing apparatus (not shown). The lower hemisphere of the detachable coffee bean container 100, when intended to be connected to the coffee brewing apparatus' coffee bean inlet 220, is lowered (i. e. moved towards the coffee brewing apparatus' coffee bean inlet 220, as shown in Figure 5B by the lower pair double arrows 164') so as to abut the equatorial rim 166 thereof to the upper rim of the coffee brewing apparatus' coffee bean inlet 220, while simultaneously engaging the coffee bean container's bottom opening passageway 170 to the inlet. Subsequently, the fixation ring 165 secured to the coffee brewing apparatus (not shown) is lowered towards the coffee bean container's equatorial rim 166 (as shown in Figure 5B by the lower pair double arrows 164) and locked, thereby fixing the detachable coffee bean container 100 in coffee bean supply position.

As soon as the connection is accomplished, the coffee bean container's closure 162 is in close proximity to the coffee brewing apparatus' coffee bean inlet 220. Said closure 162 is confining the passageway 170 capable of guiding coffee beans released from the coffee bean container's housing 110 to the outside of the detachable coffee bean container 100, e. g. into the coffee bean inlet 220 of the coffee brewing apparatus 200, as can be seen from Figure 5A. This is effected in the case of this preferred embodiment of the invention (not restricting the invention) by a closure 162 which is operating - contrary to the previous embodiment explained immediately above - from the inner side of the container's housing 110 towards the at least one container housing's bottom side opening 140: A vertical longitudinal channel 169 located on the opposite side to the at least one bottom side opening 140 of the container's housing 110 and fixed by a conus shape fixation means 167 on the inner wall of the container's housing receives the counteracting end of the closure 162'. A spring means biased against the dead end 168 of the channel exerts a pressure on the closure 162 at its end opposite to the closing end abutting against the coffee bean outlet 140, pressing it against the coffee bean outlet 140 and holding it abutting thereto, thereby safely closing said coffee bean outlet 140.

In a particularly preferred embodiment (not restricting the invention), the distance between the closure 162 and the detachable coffee bean container's bottom side opening 140 is less than the smallest diameter of a coffee bean or of a fragment thereof, even more preferably is a distance of ≤ 1 mm. This is in order to prevent coffee beans or fragments thereof from blocking the mutual operation of the coffee bean container's closure 162 and the bottom side opening 140 in the subsequent step of supplying a metered amount of coffee beans from the detachable coffee bean container 100 of the invention to the conventional coffee brewing apparatus 200.

Moreover, in a further preferred embodiment of the invention by which the invention is explained for a better understanding thereof, but which should not be construed to restrict the invention, the closure 162, when opening the passageway 170 for, or closing the passageway 170 against, a passage of coffee beans, is co-operating with a soft-material or bristle-type material lip 159 cushioning the rim of the container's coffee bean outlet 140 to which the sliding closure 162 abuts when closing against, or is released when opening, the coffee bean outlet 140. Particularly when closing, said soft-material or bristle-type material lip 159 prevents any coffee beans passing the closure 162 from being jammed when closing. In an advantageous manner, a safe closing step can be performed, and no coffee beans prevent the coffee bean out let 140 from being closed entirely. The soft material or the bristle material of the lip 159 may be made of any material a skilled person knows for such purposes, and due to their adjustable softness and their durability, soft and pliable organic polymers may be selected, as one (not restricting) example of suitable materials.

As soon as the connection step is completed, the route for a passage of coffee beans from the detachable coffee bean container 100 of the invention to the coffee brewing apparatus 200 is substantially aligned. However, the route - although aligned - is still closed at least by the sliding spherical calotte (or cap) shape closure 162 on the side of the detachable coffee bean container 100, exactly: inside the housing 110 of the detachable coffee bean container 100, thereby still preventing coffee beans from being supplied from the detachable coffee bean container 100 of the invention to the coffee brewing apparatus 200.

As soon as the user starts the coffee brewing process by pressing the relevant key), the closure 162 of the detachable coffee bean container 100 of the invention is actuated by sliding along an axis parallel to, and in the same direction as, the coffee supply direction from the detachable coffee bean container 100 to the coffee brewing apparatus' coffee bean inlet 220. In this embodiment, the closure 162 is, for example (and without restriction), in the shape of a closure 162 comprising a spherical calotte (or cap). In this case, the closure's apex is directed towards the coffee bean container's inner volume 130 (i. e. away from the bottom side opening 140) and is slidable along the axis parallel to the coffee beans' moving path and against a pressure exerted by the spring. For allowing coffee beans to pass the closure 162, its sliding is a lifting movement directed away from the coffee brewing apparatus' coffee bean inlet 220. By such a lifting movement against the pressure of the spring, a gap is generated between the lower surface opposite to the spherical calotte surface and the coffee bean outlet rim (or, as the case may be: the coffee bean outlet covered with the soft material or soft bristle type lip 159) allowing coffee beans to pass. For example, the spherical calotte closure 162 is slided by a certain distance, so as to open said gap sufficiently for allowing coffee beans to pass into the coffee brewing apparatus' coffee bean inlet 220.

As shown in Figure 5A, a lifting movement for opening the closure 162, in this embodiment, may be actuated by a push rod 225 operated by the coffee brewing apparatus' coffee bean inlet 220 upon the user's command (e. g. by pressing a suitable key on the coffee brewing apparatus 200) of starting the coffee brewing procedure. Such a push rod 225 may move in the direction towards the coffee bean container's coffee bean outlet (i. e. upwards as shown with the double arrow 226 in Figure 5A), thereby contacting the closure 162 at its lower part and moving it upwards against the vertical spring channel 169, thereby opening the closure 162 for allowing coffee beans to pass from the container 100 to the coffee brewing apparatus' coffee bean inlet 220.

The opening on the coffee brewing apparatus' coffee bean inlet side may have the same diameter as the gap on the coffee bean container's closure side or may have a different size, as long as the two adjacent openings can be made to allow to pass coffee beans through the aligned route between the detachable coffee bean container 100 and the coffee brewing apparatus 200 for a supply of coffee beans. As soon as the two openings are brought to congruence to each other, coffee beans can pass from the detachable coffee bean container 100 of the invention to the coffee brewing apparatus' coffee bean inlet 220 for being ground in a subsequent step.

As soon as the preset time has passed (in cases of a time measurement-oriented passing of coffee beans through the rotating closure 162) or the preset amount of coffee beans has entered the coffee brewing apparatus' coffee bean inlet 220 (in cases of a weight amount measurement-oriented passing of coffee beans through the sliding closure 162), or the preset volume of coffee beans has entered the coffee brewing apparatus' coffee bean inlet 220 (in case of a volume amount measurement-oriented passing of coffee beans), or the preset number of coffee beans has entered the coffee brewing apparatus' coffee bean inlet 220 (in case of an counted number measurement-oriented passing of coffee beans, the coffee brewing apparatus 200 may operate the push rod 225 to move back (i. e. towards the coffee brewing apparatus' coffee bean inlet 220). The spring biasing the closure 162 to move towards the coffee bean container's bottom side opening defining the coffee bean outlet 140 forces the closure 162 to close the coffee bean container's coffee bean outlet 140 on the coffee bean container's side by sliding - upon the pressure exerted by the spring - down back towards the rim of the coffee bean container's coffee bean outlet 140 (or, as the case may be: towards the coffee bean outlet 140 covered with the soft material or soft bristle type lip 159) so as to close the gap against the housing's bottom side opening 140.

In an alternative embodiment, said closure step(s) may be performed manually by the user on either or both of the sides.

Following said closing step, the coffee bean apparatus 100, with its at least one bottom side opening 140, preferably with its one bottom side opening 140, closed by said closure 162, may remain connected to the coffee brewing apparatus 200, either in the "ON" mode (i. e. prepared to start another sequence of process steps of brewing a coffee beverage and, eventually, subjected to another coffee brewing procedure) or in the "OFF" mode (i. e. switched off), or the detachable coffee bean container 100 may be replaced by a different detachable coffee bean container 100 containing a different type of coffee beans according to the user's choice. With such different detachable coffee bean container 100 connected to the coffee brewing apparatus 200, another coffee brewing procedure may be started in the same way (and employing the same means) as described above.

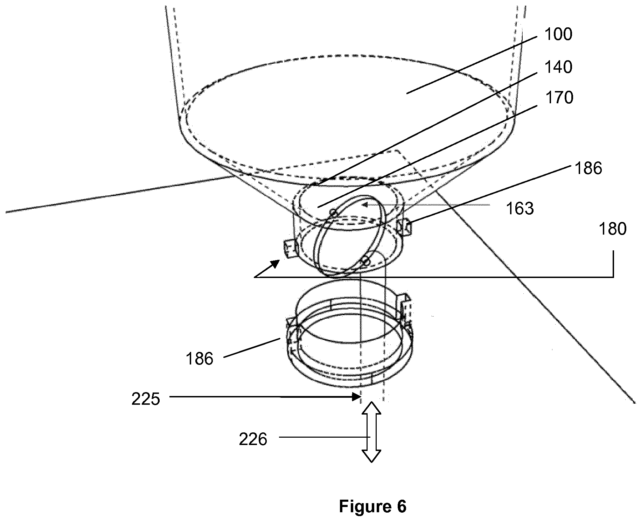

One major advantage of a detachable coffee bean container 100 comprising a closure 162 in the form of a sliding spherical calotte or cap is that such a closure 162 is capable of working in a severely restricted space and does not require powerful action to be slided when being actuated. Moreover, due to the arrangement of the closure spherical calotte (or cap) in close proximity to a corresponding opening on the side of the coffee brewing apparatus 200 (or, as the case may be: the coffee bean outlet covered with the soft material or soft bristle type lip 159), there is no risk of blocking the movement of the closure spherical calotte (or cap) 162 by coffee beans or fragments thereof, as soon as the coffee bean passageway 170 is closed, after an appropriate amount of coffee beans has passed to the coffee brewing apparatus' coffee bean inlet 220. In another exemplary embodiment, which is shown in Figure 6 exemplarily, by which the invention is explained for a better understanding thereof, but which should not be construed to restrict the invention, the closure 163 is capable of being actuated for opening or closing said bottom side opening 140 of the housing 110, for allowing a predetermined amount of coffee beans to pass, or for preventing coffee beans from passing, the closure 163, by a mechanism of overturning or tilting the closure 163 automatically (e. g. actuated by the coffee brewing apparatus 200) or manually (e. g. actuated by the user manually). Of course, other mechanisms and means (instead of an overturning/tilting closure 163) may be used, as will be appreciated by a skilled person in this technical field and as explained above.

This embodiment of the invention relies on substantially the same features as those explained above and making use of a circular disk shape closure 161 or a spherical calotte-shape closure 162, 162' (and hence can be described in a similar way by referring to parts bearing the same reference numerals), with the exception of the circular disk shape closure 161 or the spherical calotte-shape closure 162 or 162' which is a tilting/overturning circular disk closure 163 shown in Figure 6.

In the same manner as described above, the user has to make his/her selection of which type of coffee beans (packed into and stored in and held by a certain detachable coffee bean container 100 according to the invention) should be used for brewing a desired coffee beverage. Next, a container 100 holding such type of coffee beans has to be connected to the coffee brewing apparatus 100 for the supply of a predetermined amount of coffee beans to the coffee brewing apparatus' coffee bean inlet 220. This is effected (as described in more detail below) by means of the coffee bean container's adapter 180 which is capable of matching the coffee bean container's coffee bean passageway 170, and thereby the detachable coffee bean container 100 of the invention, to the coffee bean inlet 220 of the coffee brewing apparatus 200.

As soon as the connection is accomplished, the coffee bean container's overturning/tilting circular disk closure 163 is in close proximity to the coffee brewing apparatus' coffee bean inlet 220. Said closure 163 is confining the passageway 170 capable of guiding coffee beans released from the coffee bean container's housing 110 to the outside of the detachable coffee bean container 100, e. g. into the coffee bean inlet 220 of the coffee brewing apparatus 200. In a particularly preferred embodiment (not restricting the invention), the distance between the closure 163, on the coffee bean container's side on the one hand, and the coffee brewing apparatus' coffee bean inlet 220 on the other hand, is as small as possible in order to allow the circular flat disk to be tilted for allowing coffee beans to pass from the bottom side opening 140 of the detachable coffee bean container 100 to the coffee bean inlet 220 of the coffee brewing apparatus. This is in order to prevent coffee beans or fragments thereof from blocking the mutual operation of the coffee bean container's closure 163 and the coffee brewing apparatus' coffee bean inlet 220 in the subsequent step of supplying a metered amount of coffee beans from the detachable coffee bean container 100 of the invention to the conventional coffee brewing apparatus 200.

As soon as the connection step is completed, the route for a passage of coffee beans from the detachable coffee bean container 100 of the invention to the coffee brewing apparatus 200 is substantially aligned. However, the route - although aligned - is still closed at least by the overturning/tilting circular disk shape closure 163 on the side of the detachable coffee bean container 100, and preferably also by the corresponding coffee bean inlet 220 on the side of the coffee brewing apparatus 200, the two of the closures still preventing coffee beans from being supplied from the detachable coffee bean container 100 of the invention to the coffee brewing apparatus 200.

Upon receiving an opening order signal from the coffee brewing apparatus 200 (after the user started the coffee brewing process by pressing the relevant key), the closure 163 of the detachable coffee bean container 100 of the invention is actuated by rotating said circular disk around an axis perpendicular to the coffee supply direction from the detachable coffee bean container 100 to the coffee brewing apparatus' coffee bean inlet 220 (i. e. said axis being supported and actuated in a plane perpendicular to the coffee bean supply direction in the passageway 170) and passing through the center of the circular disk plane. In this embodiment, the closure 163 is, for example (and without restriction), in the shape of a closure 163 comprising a circular disk. Said disk is capable of being overturnable/tiltable around said axis passing through the center of the disk's plane into a position where the disk's plane is arranged more or less vertically, for example (without restriction) in a position parallel to the coffee bean supply direction) within the passage way 170, as shown in Figure 6, thereby transiently opening the passageway 170 for a passage of coffee beans towards the coffee brewing apparatus' coffee bean inlet 220.

Disclosed is also, and shown in Figure 6 in a similar manner as shown in Figure 5A for the closure 162, an overturning/tilting movement for opening the closure 163, in this embodiment, may be actuated by a push rod 225 operated by the coffee brewing apparatus' coffee bean inlet 220 upon the user's command (e. g. by pressing a suitable key on the coffee brewing apparatus 200) of starting the coffee brewing procedure. Such a push rod 225 may move in the direction towards the coffee bean container's coffee bean outlet (i. e. upwards as shown with the double arrow 226 in Figure 6), thereby contacting the closure 163 at its lateral part and moving it upwards against the biasing force of a spring connected to the opposite side of the overturning/tilting disk closure 163, thereby opening the closure 163 for allowing coffee beans to pass from the detachable coffee bean container 100 to the coffee brewing apparatus' coffee bean inlet 220.

The opening on the coffee brewing apparatus' coffee bean inlet side may have the same diameter as the disk's opening on the coffee bean container's closure side or may have a different size, as long as the two adjacent openings can be made to allow coffee beans to pass through the aligned route between the detachable coffee bean container 100 and the coffee brewing apparatus 200 for a supply of coffee beans. As soon as the two openings are brought to congruence to each other, coffee beans can pass from the detachable coffee bean container 100 of the invention to the coffee brewing apparatus' coffee bean inlet 220 for being ground in a subsequent step.

As soon as the preset time has passed (in cases of a time measurement-oriented passing of coffee beans through the tilting closure 163) or the preset amount of coffee beans has entered the coffee brewing apparatus' coffee bean inlet 220 (in cases of a weight amount measurement-oriented passing of coffee beans through the tilting closure 163), or the preset volume of coffee beans has entered the coffee brewing apparatus' coffee bean inlet 220 (in case of a volume amount measurement-oriented passing of coffee beans), or the preset number of coffee beans has entered the coffee brewing apparatus' coffee bean inlet 220 (in case of an counted number measurement-oriented passing of coffee beans, the coffee brewing apparatus 200 may close the opening of the brewing apparatus' coffee bean inlet 220 and may also operate the push rod 225 to move back (i. e. towards the coffee brewing apparatus' coffee bean inlet 220). The spring biasing the closure 163 to move towards the coffee bean container's bottom side opening defining the coffee bean outlet 140 forces the closure 163 to close the coffee bean container's coffee bean outlet 140 on the coffee bean container's side by overturning/tilting - upon the pressure exerted by the spring - down back towards the rim of the coffee bean container's coffee bean outlet 140 (or, as the case may be: towards the coffee bean outlet 140 covered with the soft material or soft bristle type lip 166) so as to close the gap against the housing's bottom side opening 140.

In an alternative embodiment, said closure step(s) may be performed manually by the user on either or both of the sides.

Following said closing step, the coffee bean apparatus 100, with its at least one bottom side opening 140, preferably with its one bottom side opening 140, closed by said closure 163, may remain connected to the coffee brewing apparatus 200, either in the "ON" mode (i. e. prepared to start another sequence of process steps of brewing a coffee beverage and, eventually, subjected to another coffee brewing procedure) or in the "OFF" mode (i. e. switched off), or the detachable coffee bean container 100 may be replaced by a different detachable coffee bean container 100 containing a different type of coffee beans according to the user's choice. With such different detachable coffee bean container 100 connected to the coffee brewing apparatus 200, another coffee brewing procedure may be started in the same way (and employing the same means) as described above.

One major advantage of a detachable coffee bean container 100 comprising a closure 163 in the form of an overturning or tilting rotatable circular disk is that such a closure 163 is capable of working in a severely restricted space and does not require powerful action to be rotated when being actuated. Moreover, due to the arrangement of the closure circular disk in close proximity to a corresponding opening on the side of the coffee brewing apparatus 200, there is no risk of blocking the movement of the closure disk 163 by coffee beans or fragments thereof, as soon as the coffee bean passageway 170 is closed, after an appropriate amount of coffee beans has passed to the coffee brewing apparatus' coffee bean inlet 220.

In accordance with the present invention, and as shown in Figures 4 to 8, the detachable coffee bean container 100 also comprises a passageway 170 capable of guiding coffee beans released from the housing 110 along the closure 160, 161, 162, 163 to the outside of the housing 110.

In view of its function of guiding coffee beans released from the detachable coffee bean container 100 along the closure 160 to the outside of the housing 110, the coffee bean passageway 170 is located below, or downstream to, the housing's bottom side opening 140 defining the coffee bean outlet from the housing 110. This is particularly due to the fact that it is intended in accordance with the invention that coffee beans, when being supplied from the detachable coffee bean container 100 to a coffee brewing apparatus (to which the detachable coffee bean container 100 is connected), are moved by means of gravity from the coffee bean container's housing 110 down to the bottom side opening 140 of the housing and pass along the closure 160, 161, 162, 163 in the passageway 170 to the outside of the housing 110 of the detachable coffee bean container 100.

The term "to the outside of the housing 110", as used in the present specification and claims, is understood to have the meaning that, in view of the supply of coffee beans, the coffee beans will move from the inner volume 130 of the detachable coffee bean container 100, where they were stored and held for supply, to any location not belonging to the coffee bean container housing inner volume 130 and, particularly, being (in terms of a view from the container inner volume 130) beyond the closure 160. In that sense, the term "to the outside of the housing 110" is understood to mean any location, where the coffee beans are supplied, either intentionally (e. g. to the coffee brewing apparatus' coffee bean inlet 220 or to the coffee brewing apparatus' regular coffee bean container) or unintentionally (e. g. by unintentionally opening manually the closure 160 at the bottom end of the coffee bean container's coffee bean outlet defined at the at least one coffee bean container's bottom side opening 140).

Furthermore, the term "passageway guiding coffee beans", as used in the resent specification and claims, is understood to mean that a supply of coffee beans from the housing's at least one bottom side opening (defining the coffee bean container's coffee bean outlet) is controlled so as to be directed, by the guidance of the passageway 170, to a location where the coffee beans are employed for brewing at least one coffee beverage.

In accordance with preferred embodiments of the present invention which are advantageous in view of the maintenance of the coffee beans' flavor and the taste of the coffee beverage brewed, the coffee beans, once having left the inner volume 130 of the coffee bean container's housing 110 (where their flavor and taste is preserved due to an effective sealing of the detachable coffee bean container 100) are supplied to the coffee brewing apparatus' coffee bean inlet 220, without any intermediate step and without making any detour.

Furthermore, in accordance with the present invention and as shown in Figures 4 to 8, the detachable coffee bean container 100 also comprises as one of its components, an adapter 180 capable of matching the passageway 170 of the detachable coffee bean container 100 to the coffee bean inlet 220 of a conventional coffee brewing apparatus 200 for supplying a predeterminable amount of coffee beans to said apparatus 200.

The term "adapter" as used in the present specification and claims is to understood to broadly mean any intermediate connecting part, either integrated in the coffee bean container 100 or as a separate part to be attached/mounted to the coffee bean container 100, and capable of releasably connecting a coffee bean container, particularly a detachable coffee bean container 100, to the coffee bean inlet 220 of a coffee brewing apparatus 200. Hence, this term includes adapters generally used for connecting two parts in the same way as the specialized adapter 180 capable of matching the passageway 170 of the detachable coffee bean container 100 to the coffee bean inlet 220 of a conventional coffee brewing apparatus 200 for supplying a predeterminable amount of coffee beans to said apparatus 200.

In a preferred embodiment, once the detachable coffee bean container 100 is matched, via its passageway 170, to a conventional coffee brewing apparatus 200, particularly to its coffee bean inlet 220, a coffee brewing procedure may be started on said coffee brewing apparatus 200 on the user's demand, e. g. by supplying the coffee beans via the coffee brewing apparatus coffee bean inlet 220, to the grinding means or mill 250 for preparing coffee grounds used for brewing a coffee beverage.

The terms "closing" or "matching", as used in the claims and in the present specification, are understood to mean that any connection between spaces or volumes, either of the container 100 of the invention or of the coffee brewing apparatus of the invention, are protected against an intentional or unintentional loss of coffee beans, and coffee beans stored and held within the inner volume 130 of the container 100 of the invention can be supplied to the coffee brewing apparatus 200, e. g. to its coffee bean inlet 220, altogether.and in the controlled predetermined amounts for brewing the desired amount of coffee beverage(s). Hence, these terms, in the present specification and claims, are distinguished from the term "sealing" or "sealingly" which is intended to indicate that, between the inner volume of any restricted space of a container (e. g. the inner volume 130 of the container 100 of the invention) or of any passageway (e. g. the passageway 170 guiding the coffee beans) or of any part of the coffee brewing apparatus 200 (e. g. the coffee brewing apparatus' coffee bean inlet 220) and the outer environment of the detachable coffee bean container 100 of the coffee brewing apparatus 200, there is an unlimited exchange of gases by an application of a suitable sealing. Such sealing is intended to prevent either an entry of gases, particularly of air, any cooking smells, any smoke from cigarettes or other smoking materials or any other flavor- or taste-deteriorating gases to said volume or space being in contact to the fresh coffee beans or the coffee grounds from occurring. Alternatively, such sealing is also intended to prevent an escape of gaseous components in the space above and within the coffee beans or coffee grounds from said volume or space from occurring so as to avoid a loss of flavor and taste of the coffee brewed finally. This includes, as the case may be, the maintenance of a vacuum or a filling of protection gases as nitrogen or noble gases in those spaces and volumes which serve a long-term storage of coffee beans, e. g. in the detachable coffee bean container 100 when used for storage or holding of coffee beans. Once the seal 146 serving to control whether the package is not broached at the time of purchase is removed (see the above explanation of Figure 8), there is still the cap as a barrier preventing an unlimited gas exchange between coffee bean-containing volumes and the environment from occurring, but there will be at least a minimum access of environmental air and gaseous components to those spaces of the container 100 of the invention and of the coffee brewing apparatus 200 of the invention where coffee beans are stored, held and operated (e. g. milled and converted into a coffee beverage) and by which coffee beans are supplied.

In further preferred embodiments of the invention, which might be realized alone or in combination with one or several or all other features of the invention and which are shown in Figures 1A, 1B and 4 to 8, said adapter 180 is provided with a quick-release fastener 182.

As described above, it is one of the aims of the invention that, in view of the user's wish to have available a coffee brewed from freshly ground coffee beans according to his/her personal selection, the connection of a detachable coffee bean container containing the selected coffee beans should be available, e. g. as a purchasable and detachable coffee bean container 100 storing (and holding) such coffee beans selected. In the case of wanting to brew a coffee beverage from such coffee beans, such (purchasable and detachable) coffee bean container should be connectable to the coffee brewing apparatus as easily as possible (and also with maintaining the gas atmosphere around the coffee beans stored). If so, a desired coffee beverage would be obtainable within a short time.

Moreover, in cases where a plurality of such containers of different type coffee beans are available and even are connectable to a suitable support 300, the fixation of plural coffee bean containers 100 of the invention on such a support 300 (and also the release of empty containers 100 from such a support) should be possible with a low level of efforts.

In order to cope with such requirements, the detachable coffee bean container 100 of the invention is preferably provided with an adapter 180 equipped with a quick-release fastener. The quick-release fastener of the adapter 180 provided at the detachable coffee bean container 100 of the present invention is not restricted, and a person skilled in this technical field may select quick-release fastener adapters from a large selection and in accordance with the specific requirements of a single case, particularly in view of the requirement that a safe, sealed and quickly-connective fastener adapter is required, preferably operatable by single hand use, is sought for.

In further preferred embodiments of the invention, which might be realized alone or in combination with one or several or all other features of the invention and which are shown in Figures 1A, 1B and 4 to 8, the adapter 180 is provided with a quick-release fastener having a bayonet coupling for matching the passageway 170 of the detachable coffee bean container 100 to the coffee bean inlet 220 of a coffee brewing apparatus 200. In accordance with the invention, also screw fasteners may be used for achieving the same object.

As is well known to a skilled person, a bayonet coupling is a type of connection between two cylindrical parts (in the resent invention: the adapter 180 on the side of the detachable coffee bean container 100 of the invention and the coffee bean inlet 220 on the side of the coffee brewing apparatus 200) operating along their common cylinder longitudinal axis, which connection may quickly be connected (and released by opposite direction steps) by inserting one part into the other against a resilient force (e. g. a spring) so as to obtain a safe and reliable connection.

In further preferred embodiments of the invention, which might be realized alone or in combination with one or several or all other features of the invention and which are in detail shown in Figures 4 to 6, 7 and 8, the adapter 180 is provided with a quick-release fastener having a bayonet coupling and a groove and tongue fitting 186 for matching the passageway 170 of the detachable coffee bean container 100 to the coffee bean inlet 220 of a coffee brewing apparatus 200. Preferably and as shown in Figures 4 to 6, the tongue of the groove and tongue fitting 186 is found at the container side of the adapter 180, preferably extending to the outside of the adapter cylinder, while the groove of the groove and tongue fitting is found at the side of the coffee brewing apparatus' coffee bean inlet side. A skilled person knows that this could be established the other way around, i. e. the tongue of the groove and tongue fitting is found at the brewing apparatus coffee bean inlet side, and the groove is found at the container's adapter side. A distinct connection may be created by such preferred adapter 180 including a quick-release fastener having a bayonet coupling and a groove and tongue fitting 186, which - in particular - may be operated by single hand use and with creating a safe connection between the detachable coffee bean container 100 and the coffee brewing apparatus 200 at its coffee bean inlet 220.

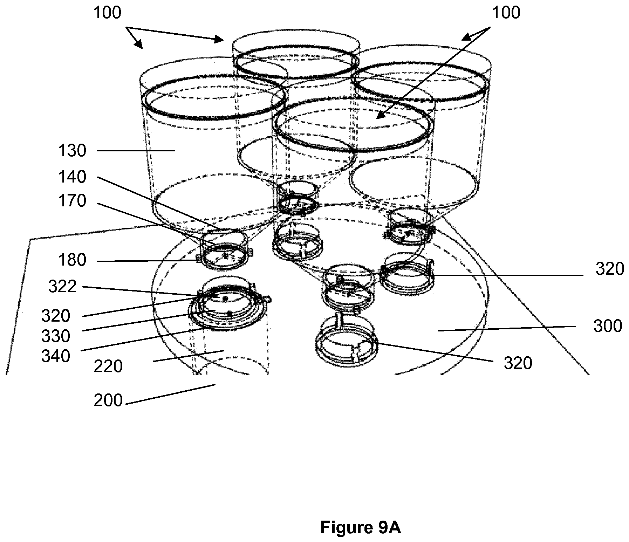

As described above, in further preferred embodiments of the invention, which might be realized alone or in combination with one or several or all other features of the invention and which are in detail shown in Figure 9A, the detachable coffee bean container 100 of the invention is, or several (for example two, three or four) coffee bean containers 100 are, capable of being matched, via its adapter 180/their adapters 180, to at least one multiple coffee bean container support 300 capable of receiving a plurality of coffee bean containers 100 according to the above detailed description via their respective adapters 180 and matched. The number of coffee bean containers 100 connectable to the multiple coffee bean container support 300 is not restricted and may be selected by a skilled person in accordance with several parameters to be observed, e. g. by the shape and size of the coffee bean containers 100 selected. In preferred embodiments of the invention, one, two, three, for or even more, e. g. five, coffee bean containers 100 may be connected to the multiple coffee bean container support 300.

In a preferred embodiment of the invention, which may be realized alone or in combination with one or several or all other features of the invention, the multiple coffee bean container support 300 is capable of being connected to a brewing apparatus coffee bean inlet 220 by means of one support coffee bean passageway 330 provided with an adapter 340 similar to or identical to the adapter 180 by which a detachable coffee bean container 100 is connectable to the coffee brewing apparatus' coffee bean inlet 220. On the other hand, the multiple coffee bean container support 300 is capable to receive said one single detachable coffee bean container 100 or a plurality of detachable coffee bean containers 100 by a structure similar to or identical to the structure connecting a single detachable coffee bean container 100 to the coffee brewing apparatus, as is the detachable coffee bean container 100, or the plurality of coffee bean containers 100, connectable to the multiple coffee bean container support 300 by means of their respective adapters 180 and to receiving openings similar to, or even identical with the openings of the coffee brewing apparatus' coffee bean inlets 220. As a result, the support 300 is equipped with the same mechanical receiving and closure opening parts as is the coffee brewing apparatus in case that one single detachable coffee bean container 100 is connected to it.

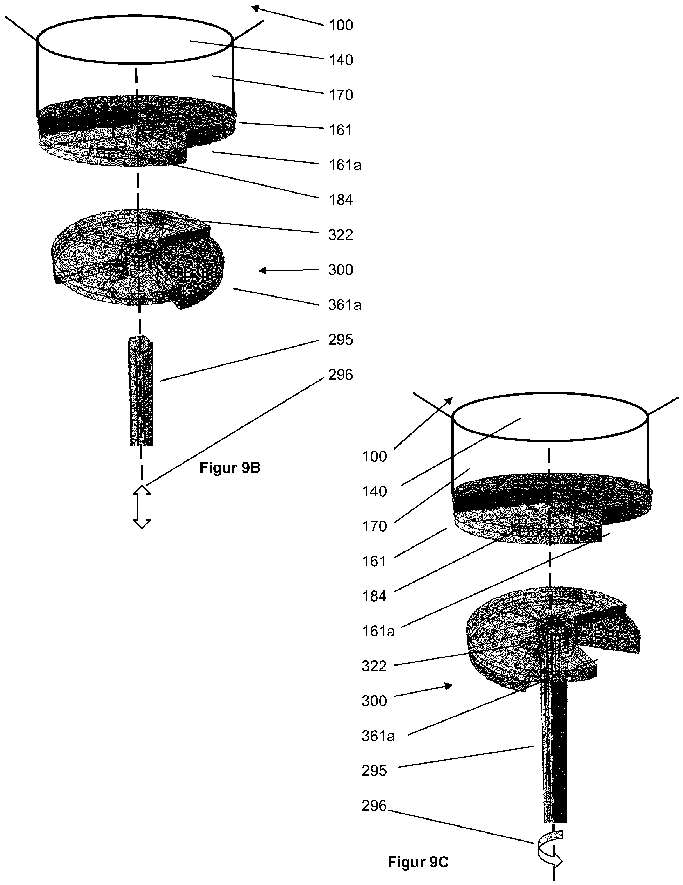

In one preferred embodiment of the invention, which is shown in Figures 9B and 9C and which may be realized alone or in combination with one or several or all other features of the invention, the multiple coffee bean container support 300, is capable of being connected to the brewing apparatus' coffee bean inlet 220, on its lower side, and is likewise capable of receiving one or two or several detachable coffee bean containers 100 via its/their coffee bean container's coffee bean outlet passage adapter(s) 180, on its upper side. In the same way as described above for the steps of connecting one single detachable coffee bean container 100 via its adapter to the coffee brewing apparatus' coffee bean inlet 220, each detachable coffee bean container 100 is capable of being connected to the support 300, particular to one of the support's adapter 320 for connecting, fixing and locking one or several coffee bean container(s) 100 to the support 300 (see Figure 9A; not shown in Figures 9B, 9C).

Said step of simultaneously connecting, fixing and locking the detachable container(s) via its/their adapter(s) 180 to the support 300, and via the support 300 to the coffee brewing apparatus' coffee bean inlet 220 and simultaneously opening the detachable coffee bean container's at least one bottom side opening 140 defining the coffee bean outlet is shown in Figures 9B and 9C. As shown therein, the connecting step is effected by (i) approaching one single detachable coffee bean container's closure 161 (which is, for example, in the shape of a circular disk having a sectoral opening 161a for allowing coffee beans to pass, as exemplified above) and adapter 180 to the support 300, particularly to one of its support inlets; (ii) inserting the coffee bean container's adapter's tongues 186 (see Figures 4a, 4B) into the support inlet's grooves, thereby preparing them for the locking step, by the adapter's quick release fastener matching to the support inlet 220; (iii) inserting at least one protrusion 322, on the support inlet side, into at least one recess 184, on the coffee bean container's side and opposite to said at least one protrusion 322; and (iv) performing a circular movement of the coffee bean container 100, in a plane parallel to the coffee bean container's closure 161 in its closed position, by an angle of, for example, 90 °. Of course, the angle of the movement may be different from 90 °; a skilled person may select the angle in accordance with the requirements of a single case, e. g, dependent upon the size and shape of the sectoral opening of the circular disk enabling coffee beans to pass from the detachable container 100 of the invention to the support's inlet.

By said circular movement of the coffee bean container 100, the coffee bean container's adapter 180 is tightly locked into the support's inlet. Simultaneously, due to the engagement of the support's inlet's at least one protrusion 322 into the coffee bean container closure's at least one recess 184, the closure 161 does not follow the coffee bean container's circular movement, but is kept engaged to the support inlet due to the engagement(s) of protrusion(s) 322 and recess(es) 184; see Figures 9B and 9C. As a consequence, the closure 161 is moved by the same angle as the circular movement, relative to the coffee bean container's bottom side opening 140, thereby opening the closure's sectoral opening 161a, by which opening step the closure 161 is prepared for allowing coffee beans to pass.

The at least one recess 184 on the detachable container's side, and the at least one protrusion 322 on the support inlet's side, may be one recess 184 and one protrusion 322 or may be two or several, for example three or four, recesses 184 and protrusions 322, as long as each recess 184 comes into engagement with one protrusion 322. In a preferred embodiment of the invention, the number of recess(es) 184 and protrusion(s) 322 is one or two. These two cases are shown in Figures 9A, 9B and 9C.

Similarly, the shape of recess(es) 184 and protrusion(s) 322 can be selected freely and is not restricted, in accordance with the invention. As exemplary embodiments (not restricting the invention and shown in Figures 9A, 9B and 9C), the protrusion(s) 322 may have a circular (e. g. button or knob) shape, while the recess(es) 184 may have corresponding circular (e. g. circlet) shape capable of engagedly receiving said button(s) or knob(s).

A skilled person will recognize, too, that, instead of the above embodiment, the recess(es) 184 may be on the coffee bean inlet's side, and the protrusion(s) 322 may be on the coffee bean container's side.

Reference is made to Figures 9B and 9C showing the detailed structures of the closure 161 of the embodiment of a detachable coffee bean container of the invention shown in Figure 9A. The upper parts of Figures 9B and 9C explain the detailed structure of the preferred embodiment of closure 161 explained above to have the shape of a circular disk forming the closure of the coffee bean container's bottom side opening 140 defining a coffee bean outlet comprising the coffee beans' passageway 170. In a preferred embodiment shown in Figures 4B and 4C, the closure 161 comprises two disks slidable along each other around a perpendicular axis in both disks' center (dotted line in Figures 9B and 9C). The upper disk is peripherally fixed to the inner wall of the coffee bean container's passageway 170, while the lower disk is movable around the axis.

In the embodiment shown in Figures 9B and 9C, the disks of closure 161 consist (without restricting the invention to said embodiment) of two circular disks each lacking a quarter of its disk shape. In the step of opening the closure 161 (described in detail below), coffee beans can pass the closure only if the missing quarters of the two disks are one above the other, thereby allowing coffee beans to move downwards, due to gravity, from the coffee bean container's inner volume 130 to the outside.

The lower sliding disk of the closure 161 is provided on its bottom side with at least one (in the embodiment shown in Figures 9B and 9C: with two) recess(es) 184 (in the embodiment shown in Figures 9B and 9C: with two circlet-shape recesses 184). Preferably, these two circlet-shape recesses 184 are arranged at opposite quarters of the disk, without restricting the invention to said embodiment.

In the embodiment shown in Figures 9B and 9C in their lower part, the support's inlet is provided with a similar closure element, which - in its preferred embodiment, without restricting the invention to said embodiment - comprises two disks slidable along each other around the perpendicular axis in both disks' center (dotted line in Figures 9B and 9C). The upper disk is peripherally fixed to the inner wall of the support inlet, while the lower disk is movable around the axis. The latter movement may be actuated automatically by the coffee brewing apparatus 200 upon the user's command or may be actuated manually by the user when starting the coffee grinding and brewing process, as will be explained below.

In the embodiment shown in Figures 9B and 9C, the disks of the support's inlet consist (without restricting the invention to said embodiment) of two circular disks each lacking a quarter of its disk shape. In the step of opening the closure on the support's side (described in detail below), coffee beans can pass the closure only if the missing quarters of the two disks are one above the other and above those of the detachable coffee bean container 100 at the same time, thereby allowing coffee beans to move downwards, due to gravity, from the outside into the support's inlet.

The upper sliding disk of the closure on the support's inlet side is provided on its upper side with at least one (in the embodiment shown in Figures 9B and 9C: with two) protrusion(s) 322 (in the embodiment shown in Figures 9B and 9C: with two knob-shape protrusions 322). Preferably, these two knob-shape protrusions 322 are arranged at opposite quarters of the disk, without restricting the invention to said embodiment.

The support 300 is capable of being turned in a plane perpendicular to the coffee bean passage direction (i. e. around an axis parallel to the coffee bean passage direction, so as to bring the passageway 170 of one of the coffee bean containers 100 connected to the support 300 immediately above the coffee brewing apparatus' coffee bean inlet 220, so as to allow a direct supply of coffee beans from the inner volume 130 of only one of the detachable coffee bean containers 100, i. e. the one which is placed immediately above the coffee brewing apparatus' coffee bean inlet 220, into the coffee bean inlet 220.

In one preferred embodiment of the invention, which is shown in Figures 9B and 9C in two successive steps and which may be realized alone or in combination with one or several or all other features of the invention, the step of opening the support inlet's opening is effected by the equipment provided by the coffee brewing apparatus 200. In said particularly preferred embodiment, the coffee brewing apparatus advances an actuation rod 295 from the coffee brewing apparatus' inner side towards the support, i. e. in an upward direction, as shown by the double arrow 296 in Figure 9B. The actuation rod is driven by a suitable driving means and, at its upper end, is provided with an irregular tip having, for example, a triangle, square, pentagon or similar shape. Said tip is capable of being received by a correspondingly hole-shaped (e. g. triangle, square, pentagon etc.) mouth on the lower side of the support closure's lower circular disk.

Upon the coffee brewing apparatus' actuation following the user's pressing the key for starting the coffee brewing procedure, the actuation rod 295 is moved upwards into the support's lower side mouth. Once received, the driving means (following the user's wish to continue the coffee brewing procedure) starts moving the rod around its longitudinal axis (parallel to the axis shown in Figures 9B and 9C as a dotted line). The direction of movement is shown in Figure 9C by the circular arrow 296. Figure 9B shows the stage when the support's sectoral opening 361a is closed (or almost closed). Upon actuation by the actuation rod 295 into a direction shown by the arrow 296 in Figure 9C, the sectoral opening 361a is opened up, thereby allowing coffee beans passing the coffee bean container's sectoral opening 161a due to gravity entering the support's sectoral opening 361a and continuing into the coffee brewing apparatus' coffee bean inlet 220 and from there continuing to the grinding step.

After the predetermined amount of coffee beans passed, the actuation rod 295 is driven by its driving means in a direction contrary to the one shown by the arrow 296 in Figure 9C, thereby closing the support's sectoral opening 361a (i. e. re-establishing the picture shown in Figure 9B). No further coffee beans pass the support's closure. For a new coffee brewing step, the user first has to make a choice as to the desired coffee beans to be supplied. Then, either the same detachable coffee bean container 100 as above will remain in the same position and connected to the support 300, or the support 300 will have to be turned to bring another detachable coffee bean container 100 into the coffee bean supply position, on a new detachable coffee bean container 100 will replace one already connected to the support 300.

In one embodiment of the invention, a plurality, for example two, three or even more, for example four or five, of said detachable coffee bean containers 100 may be stored on a stand, receiving and holding several coffee bean containers 100 described above in all details. In case that the user desires to brew an coffee beverage, e. g. a coffee beverage according to his/her preferred taste, one of the coffee bean containers 100 received in such a stand is taken away and will be connected, in the manner described below in more detail in the process part of this specification, to the coffee brewing apparatus 100 or to a support 300 connecting a plurality of coffee bean containers 100 to a coffee brewing apparatus 200 for brewing a coffee beverage, e. g. a coffee, an "espresso"-type coffee, a "cappuccino"-type coffee etc.. After use, the detachable coffee bean container 100 may be disconnected from the coffee brewing apparatus 100 via the adapter 180 and returned to its place on the stand, for example (and preferably) again via the adapter 180, so as to be stored for later use. If empty after the coffee brewing step, i. e. completely deprived from coffee beans, the coffee bean container may be discarded or may be filled with fresh coffee beans according to the user's wish.

In an alternative embodiment of the invention, said support 300 is capable of being connected, or even may be connected permanently, to the coffee bean inlet 220 of a coffee brewing apparatus 200, e. g. by a similar (or even identical) type of adapter 340 which may also be used for connecting the detachable coffee bean container 100 of the invention to the coffee brewing apparatus 200. On a plurality of, e. g. two or three or four or even more, openings adaptable to the coffee bean container's coffee bean-guiding passageway 170, a number of two, three or four or even more coffee bean containers 100 of the invention, as in detail described above, may be received and safely secured. The support 300 may be turned or shifted so as to move the adapter 180 of one detachable coffee bean container 100 above the coffee bean inlet 220 of the coffee brewing apparatus 200. After transiently opening the closure 160 of said detachable container 100 manually or automatically (as described above in detail), coffee beans held in the detachable coffee bean container 100 connected are allowed to be supplied to the coffee brewing apparatus' coffee bean inlet 220 at a predetermined amount. While this happens, the other coffee bean containers 100 received in said support 300 are prevented from supplying coffee beans at the same time, preferably by their respective closures 160.

As already described above, the closures 160 applicable to this embodiment of the invention may be rotating closures 161, e. g. rotating circular disk-shape closures, sliding closures 162, e. g. sliding spherical calotte-shape closures, or overturning/tilting closures 163, e. g. overturning/tilting circular disk-shape closures, as described above in detail, without restricting the invention to those.

As already pointed out above, the invention also relates to a coffee brewing apparatus 200. The term "coffee brewing apparatus" was also explained above in relation to its meaning in the present specification and claims.

In a narrower definition of the term "coffee brewing apparatus 200" applicable to preferred embodiments and not restricting the present invention and the meaning of the term defined above, a coffee brewing apparatus 200 of the invention comprises, as its relevant components, a coffee bean storage container 210 capable of storing and holding coffee beans and of supplying them via a coffee bean inlet 220 for brewing coffee; a water storage container 230 capable of storing and holding water and of supplying it via a water inlet 235 to a water heating means 238 for heating the water for brewing coffee; a coffee bean passageway 240 connecting the coffee bean inlet 210 to a coffee bean grinding means or mill 250; a coffee grounds passageway 255 connecting the mill 250 to a coffee brewing unit 270; the coffee brewing unit 260 where fresh coffee is brewed from the coffee grounds supplied by the coffee grounds passageway 255 and the hot water supplied by a water conveying means from the water heating means 238; a brewed coffee beverage outlet 270 filling the freshly brewed coffee or coffee beverage into a drinking receptacle 280; and a depleted coffee discharge container 290. A coffee brewing apparatus of such a type and meant by the term "coffee brewing apparatus" in the resent specification and claims is shown in Figure 2, what concerns the external appearance, and is shown in the flow sheet of Figure 3, what concerns the functional co-operation of its components.

In accordance with the present invention, such a coffee brewing apparatus 200 further comprises at least one detachable coffee bean container 100 according to the above detailed description. Said at least one coffee bean container may be one detachable coffee bean container 100, or may be two or three or four or even more, e. g. five, coffee bean containers 100 according to the above detailed description. Said one or more than one coffee bean container(s) 100 according to the above detailed description is/are releasably connected to the coffee brewing apparatus' coffee bean inlet 220 and capable of supplying coffee beans to said apparatus 200, as is described below. For describing the container 100 employed in the coffee brewing apparatus of the invention, reference is made to the above detailed description thereof, which is not repeated here another time for reasons of simplicity. All features of said contained described above may be combined with the features of the coffee brewing apparatus, either singly or several of them or all of them, as described above.

In a preferred embodiment of the invention, which may be realized alone or in combination with one or several or all other features of the invention, the coffee brewing apparatus 200 of the invention may comprise matched, instead of the at least one detachable coffee bean container 100, at least one multiple coffee bean container support 300 capable of receiving a plurality of coffee bean containers 100 according to the above detailed description via their respective adapters 180, said support 300 being connected to the coffee bean inlet 220 of said coffee brewing apparatus 200 so as to move the adapter 180 of one of the plurality of coffee bean containers 100 above the coffee bean inlet 220 of said coffee brewing apparatus 200, thereby allowing said detachable coffee bean container 100 to supply a predeterminable amount of coffee beans to the coffee bean inlet 220 of the coffee brewing apparatus 200, while the others of said plurality of coffee bean containers 100 received in said support 300 are prevented from supplying coffee beans at the same time.

As a striking feature of the coffee brewing apparatus of the invention, the supply of coffee beans from the container 100 according to the invention to the coffee brewing apparatus 200 of the invention, e. g. to its coffee bean inlet 220, is effected by means of coffee beans moving due to their gravity, i. e. in a vertically downward direction, substantially. This is possible due to the fact that the container 100 of the invention supplies the coffee beans via its at least one bottom side opening 140 defining a coffee bean outlet to the coffee brewing apparatus 200, e. g. to its coffee bean inlet 220. From their point of supply, the coffee beans move further substantially downwards, again due to their gravity. This concept was and is considered advantageous, because any conveying means for conveying the coffee beans (or the coffee grounds obtained therefrom by milling) are obsolete.

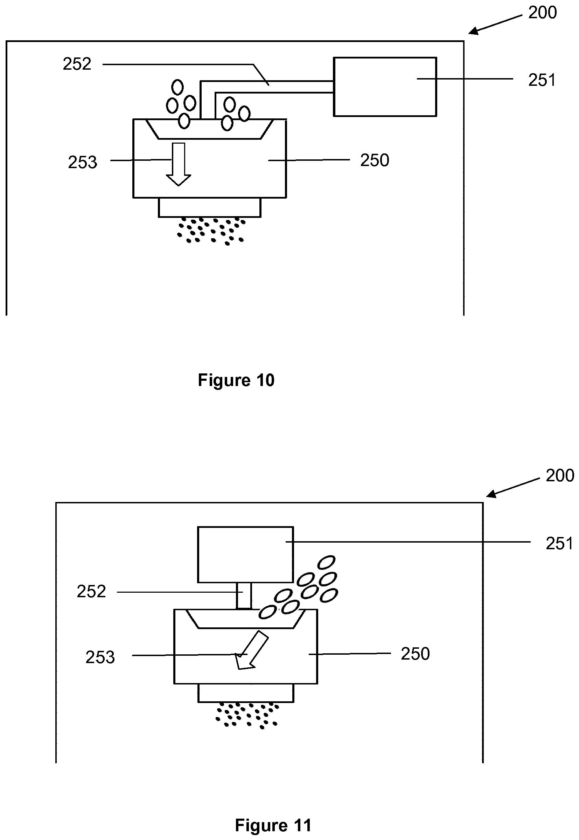

In order to make further use of said concept, which is shown in detail in Figures 10 and 11, the coffee brewing apparatus 200 of the invention has advantageously (and therefore: preferably) arranged its coffee bean grinding means or mill's driving means 251 not below the coffee bean grinding means or mill 250. This is advantageous, because the coffee grounds obtained from the mill 250 may easily leave the mill in a downward movement on their way to the coffee brewing unit 260, without leaving any remaining coffee grounds within the mill 250 or any of its passageways.

In a preferred embodiment of the invention, which may be realized alone or in combination with one or several or all other features of the invention, the coffee brewing apparatus 200 of the invention has its coffee bean grinding means or mill's driving means 251 arranged above the coffee bean grinding means or mill 250, as shown in Figure 11, or alternatively, the coffee brewing apparatus 200 of the invention has its coffee bean grinding means or mill's driving means 251 arranged laterally to the coffee bean grinding means or mill 250, as shown in Figure 10. In both cases, the driving means 251 is connected to the mill 250 via suitable transmission means or gear trains 252. Hence, the mill 250 or its drive means 251 do not prevent the coffee beans (and the coffee grounds as well) to move downwards by gravity, as is shown in Figures 10 and 11 by the directional arrows 253. This is effected especially either by (a) moving the coffee beans due to gravity into the mill 250, if the mill driving means (motor) 251 is located laterally to the mill 250, as shown in Figure 10; or by moving the beans by guiding them on a horizontal, but steeply sloping passageway, if the mill driving means (motor) 251 is located above the mill 250, as shown in Figure 11.

Finally, the invention also relates to a process for brewing coffee from coffee grounds obtained immediately before the brewing step from freshly ground coffee beans on an automatic coffee brewing apparatus 200, the novel and inventive process comprising the steps of
(a) providing to a coffee brewing apparatus 200 comprising a coffee bean storage container 210 capable of storing and holding coffee beans and of supplying them via a coffee bean inlet 220 for brewing coffee; a water storage container 230 capable of storing and holding water and of supplying it via a water inlet 235 to a water heating means 238 for heating the water for brewing coffee; a coffee bean passageway 240 connecting the coffee bean inlet 210 to a coffee grinding means or mill 250; a coffee grounds passageway 255 connecting the mill 250 to a coffee brewing unit 270; the coffee brewing unit 260 where fresh coffee is brewed from the coffee grounds supplied by the coffee grounds passageway 255 and the hot water supplied by water conveying means from the water heating means 238; a brewed coffee beverage outlet 270 filling the freshly brewed coffee into a drinking receptacle 280; and a depleted coffee discharge container 290;
(b) selecting a detachable coffee bean container 100 as described above in detail and storing and holding a type of desired coffee beans in an amount sufficient for brewing at least one serving of freshly brewed coffee;
(c) connecting the detachable coffee bean container 100 selected in step (b) to said coffee brewing apparatus' coffee bean inlet 220;
(d) starting the coffee brewing automated procedure on the coffee brewing apparatus 200, whereupon
(e) the coffee brewing apparatus 200 requests a supply of a predetermined amount of coffee beans from the detachable coffee bean container 100
(f) to be delivered from the coffee bean container's housing inner volume 130 via the coffee bean container's coffee bean guiding passageway 170 and passing the coffee bean container's bottom side opening closure 160
(g) to the coffee brewing apparatus' coffee bean inlet 220; and
(h) delivered via the coffee brewing apparatus' coffee bean passageway 240 to the coffee bean grinding means or mill 250 and further to the coffee brewing apparatus' coffee brewing unit 260;
(i) receiving a coffee beverage at the coffee brewing apparatus' brewed coffee beverage outlet 270; and optionally
(j) disconnecting the detachable coffee bean container 100 connected in step (c) from said coffee brewing apparatus' coffee bean storage container 210; and optionally
(k) selecting a second container 100 as described above in detail and storing and holding a type of coffee beans different from those stored and held by the first container, connecting said second container 100 to the coffee brewing apparatus' coffee bean inlet 220 and starting the coffee brewing automatic procedure on the coffee brewing apparatus 200 with steps (d) et seq. above.

In a preferred embodiment of the invention, which may be realized alone or in combination with one or several or all other features of the invention, the process of brewing coffee from coffee grounds obtained immediately before the brewing step from freshly ground coffee beans on an automatic coffee brewing apparatus (200), the process comprising the steps of
(a) providing for a coffee brewing apparatus 200 comprising a coffee bean storage container 210 capable of storing and holding coffee beans and of supplying them via a coffee bean inlet 220 for brewing coffee; a water storage container 230 capable of storing and holding water and of supplying it via a water inlet 235 to a water heating means 238 for heating the water for brewing coffee; a coffee bean passageway 240 connecting the coffee bean inlet 210 to a coffee grinding means or mill 250; a coffee grounds passageway 255 connecting the mill 250 to a coffee brewing unit 270; the coffee brewing unit 260 where fresh coffee is brewed from the coffee grounds supplied by the coffee grounds passageway 255 and the hot water supplied by water conveying means from the water heating means 238; a brewed coffee beverage outlet 270 filling the freshly brewed coffee into a drinking receptacle 280; and a depleted coffee discharge container 290;
(b) selecting a detachable coffee bean container 100 as described in detail above and storing and holding a type of desired coffee beans in an amount sufficient for brewing at least one serving of freshly brewed coffee, preferably storing and holding customized origin coffee beans and/or customized roastings of coffee beans and/or customized blends of coffee beans;
(c) connecting the detachable coffee bean container 100 selected in step (b) to a support 300 for receiving a plurality of coffee bean containers 100 as described below in detail and, in turn connecting said support 300 holding at least one coffee bean container 100 selected in step (b) to said coffee brewing apparatus' coffee bean inlet 220 in such a way that a selected one of the at least one coffee bean container(s) 100 received by the support 300 is capable of being moved, and is moved, into a position suitable for supplying coffee beans upon request;
(d) starting the coffee brewing automated procedure on the coffee brewing apparatus 200, whereupon
(e) the coffee brewing apparatus 200 requests a supply of a predetermined amount of coffee beans from the detachable coffee bean container 100 received on the support 300 being in the position suitable for supplying coffee beans
(f) to be delivered from the coffee bean container's housing inner volume 130 via the coffee bean container's coffee bean guiding passageway 170 and passing the coffee bean container's bottom side opening closure 160
(g) to the coffee brewing apparatus' coffee bean inlet 220; and
(h) delivered via the coffee brewing apparatus' coffee bean passageway 240 to the coffee bean grinding means or mill 250 and further to the coffee brewing apparatus' coffee brewing unit 260;
(i) receiving a coffee beverage at the coffee brewing apparatus' brewed coffee beverage outlet 270; and optionally
(j) disconnecting the detachable coffee bean container 100 connected to said support 300 in step (c) from said support 300 or leaving it connected for further coffee brewing steps; and optionally
(k) selecting a second or even further detachable container(s) 100 as described below in more detail and storing and holding a type of coffee beans different from those stored and held by the first detachable container 100, connecting said second or even further detachable container(s) 100 to the coffee brewing apparatus' coffee bean container support 300 in a manner that one of said second or even further container(s) 100 received by the support 300 is capable of being moved, and is moved, into a position suitable for supplying coffee beans upon request to the coffee brewing apparatus' coffee bean inlet 220 and starting the coffee brewing automatic procedure on the coffee brewing apparatus 200 with steps (d) et seq. above.

The invention was described above in detail while referring to preferred embodiments and Figures showing said preferred embodiments. These preferred embodiments are presented for better explaining and understanding the invention and should not be construed to restrict the invention. The scope of the invention is defined only by the appended claims.

### List of reference numerals

- 100: Coffee bean container
- 110: Housing
- 120: Outer wall of the housing
- 130: Inner volume of the housing
- 140: Opening defining coffee bean outlet
- 141: Coffee bean outlet
- 145: Protecting cap
- 146: Seal
- 150: Additional opening defining coffee bean inlet
- 151: Cap for additional opening
- 159: Polymer-type rim, bristle-type rim
- 160: Closure
- 161: Rotating closure
- 161a: Sectoral opening
- 162: Sliding closure
- 163: Buckling/tilting closure
- 164: Double arrows showing movement direction
- 165: Fixation ring
- 166: Equatorial rim
- 167: Conus shape fixation means
- 168: Dead end
- 169: Vertical channel
- 170: Passageway
- 180: Adapter
- 184: Recess
- 186: Tongue of groove & tongue fitting of quick release fastener
- 200: Coffee brewing apparatus
- 210: Coffee bean storage container of coffee brewing apparatus
- 220: Coffee bean inlet of the coffee brewing apparatus 200
- 221: Groove of groove & tongue fitting of quick release fastener
- 222: Protrusion
- 225: Push rod
- 230: water storage container
- 235: Water inlet
- 237: Water passageway
- 238: Water heating means
- 239: Heated water passageway
- 240: Coffee bean passageway
- 250: Coffee grinding means or mill
- 251: Driving means/motor
- 252: Transmission / gear
- 253: Directional arrow for coffee bean movement
- 255: Ground coffee passageway
- 260: Coffee brewing unit
- 270: Brewed coffee outlet
- 280: Drinking receptacle
- 290: Depleted coffee discharge container
- 295: Actuation rod
- 296: Directional arrows for actuation rod 295
- 300: Support for plurality of coffee bean containers 100
- 320: Support adapter for coffee bean container
- 322: Protrusion
- 330: Support coffee bean passageway
- 340: Adapter for connecting support 300 to brewing apparatus
- 361a: Sectoral opening at support 300

## Claims

1. A detachable coffee bean container (100) for storing, holding and supplying coffee beans, said container (100) comprising
- a housing (110) having at least one outer wall (120) defining an inner volume (130) capable of storing and holding coffee beans, said housing (110) having at least one bottom side opening (140) defining a coffee bean outlet (141) capable of supplying coffee beans stored and held within the inner volume (130) to the outside of the housing (110);
- a closure (160) exterior to said bottom side opening (140) of said housing (110), being in the shape of a flat circular disk closure (161) having a sectoral opening for allowing coffee beans to pass and capable of closing said bottom side opening (140) against, or transiently opening it for, a passage of coffee beans to the outside of the housing (110), by a mechanism of rotating the closure (160) automatically or by hand;
- a passageway (170) capable of guiding coffee beans released from the housing (110) through the closure (160) to the outside of the housing (110);
- an adapter (180) capable of matching the passageway (170) of the coffee bean container (100) to a coffee bean inlet (220) of a conventional coffee brewing apparatus (200) for supplying a predeterminable amount of coffee beans to said apparatus (200); wherein
- said closure (160) is capable of being opened simultaneously with the step of connecting to, and of being closed simultaneously with the step of disconnecting from, the coffee brewing apparatus' coffee bean inlet (220), after the adapter's matching step, by a circular movement in the plane of the adapter's contacting parts and of the coffee brewing machine's coffee bean inlet (220); wherein a coffee bean container closure's at least one recess (184) is adapted to come into engagement with a coffee bean inlet's at least one protrusion (222);
- said closure (160) is capable of supplying coffee beans from the coffee bean container (100) to a connected coffee brewing apparatus' coffee bean inlet (220) upon opening an aligned route between the coffee bean container (100) and the coffee brewing apparatus' coffee bean inlet (220) by the coffee brewing apparatus' action automatically or by hand; and
- said closure (160) is capable of being actuated and controlled for closing or opening said bottom side opening (140) of said housing (110), automatically or by hand, from the outside of the housing (110) by one mechanism selected from the group consisting of rotating the closure (161), sliding the closure (162), buckling the closure (163), lifting the closure (162), lowering the closure (162) and combinations thereof.

2. The detachable coffee bean container (100) according to claim 1, wherein said housing (110) is made of a disposable material; preferably wherein said housing (110) is made of a self-supporting disposable material, more preferably wherein said housing (110) is made of a self-supporting disposable and gas-tight material; even more preferably wherein said housing (110) is made of a self-supporting disposable and gas-tight material capable of being used as a marketable coffee bean package, most preferably wherein said housing (110) is made of a self-supporting disposable and pliable gas-tight material capable of being used as a marketable coffee bean package.

3. The detachable coffee bean container (100) according to claim 1 or claim 2, wherein said housing (110) further comprises an opening (150) defining a coffee bean inlet capable of being fed with coffee beans to be stored and held within the inner volume (130) of the housing (110), preferably wherein said opening (150) is sealable; or wherein the at least one bottom side opening (140) defining a coffee bean outlet (141) is capable of receiving coffee beans to be stored and held within the inner volume (130) of the housing (110).

4. The detachable coffee bean container (100) according to any one or more of claims 1 to 3, wherein said closure (160) is capable of being actuated and controlled by the coffee brewing apparatus' action automatically.

5. The detachable coffee bean container (100) according to any one or more of claims 1 to 4, wherein the adapter (180) is provided with a quick-release fastener (182), preferably with a quick-release fastener (182) having a bayonet coupling (184), more preferably with a quick-release fastener (182) having a bayonet coupling (184) and a groove and tongue fitting (186), for matching the passageway (170) of the coffee bean container (100) to the coffee bean inlet (220) of a coffee brewing apparatus (200).

6. The detachable coffee bean container (100) according to any one or more of claims 1 to 5, which container (100) is capable of being matched via its adapter (180), to at least one multiple coffee bean container support (300) capable of receiving a plurality of coffee bean containers (100) according to claims 1 to 5 via their respective adapters (180) and matched, said support (300) either not being connected to the coffee bean inlet (220) of a coffee brewing apparatus (200), or said support (300) being connected to the coffee bean inlet (220) of a coffee brewing apparatus (200) so as to move the adapter (180) of one coffee bean container (100) above the coffee bean inlet (220) of said coffee brewing apparatus (200), thereby allowing said one coffee bean container (100) to supply a predeterminable amount of coffee beans to the coffee bean inlet (220) of the coffee brewing apparatus, while the other coffee bean containers (100) received in said support (300) are prevented from supplying coffee beans at the same time.

7. A coffee brewing apparatus (200) comprising a coffee bean storage container (210) capable of storing and holding coffee beans and of supplying them via a coffee bean inlet (220) for brewing coffee; a water storage container (230) capable of storing and holding water and of supplying it via a water inlet (235) to a water heating means (238) for heating the water for brewing coffee; a coffee bean passageway (240) connecting the coffee bean inlet (220) to a coffee bean grinding means or mill (250); a coffee grounds passageway (255) connecting the mill (250) to a coffee brewing unit (260); the coffee brewing unit (260) where fresh coffee is brewed from the coffee grounds supplied by the coffee grounds passageway (255) and the hot water supplied by a water conveying means from the water heating means (238); a brewed coffee beverage outlet (270) filling the freshly brewed coffee into a drinking receptacle (280); and a depleted coffee discharge container (290), said coffee brewing apparatus (200) further comprising at least one detachable coffee bean container (100) according to any one or more of claims 1 to 6 releasably connected to the coffee brewing apparatus' coffee bean inlet (220) by means of the at least one coffee bean container's matching adapter (180) and capable of supplying coffee beans from the at least one coffee bean container's housing (110) through a bottom side opening (140) and at least one coffee bean container's coffee bean passageway (170) to said coffee brewing apparatus (200); wherein, exterior to said bottom side opening (140) of said housing (110), there is a closure (160) being in the shape of a flat circular disk closure (161) having a sectoral opening for allowing coffee beans to pass and capable of closing said bottom side opening (140) against, or transiently opening it for, a passage of coffee beans, by a mechanism of rotating the closure (160) automatically or by hand; said closure (160) being capable of being opened simultaneously with the step of connecting to, and of being closed simultaneously with the step of disconnecting from, the coffee brewing apparatus' coffee bean inlet (220), after the adapter's matching step, by a circular movement in the plane of the adapter's contacting parts and of the coffee brewing machine's coffee bean inlet (220); and said closure (160) is capable of supplying coffee beans from the coffee bean container (100) to the connected coffee brewing apparatus' coffee bean inlet (220) upon opening an aligned route between the coffee bean container (100) and the coffee brewing apparatus' coffee bean inlet (220) by the coffee brewing apparatus' action automatically or by hand.

8. The coffee brewing apparatus (200) according to claim 7, comprising, instead of the at least one detachable coffee bean container (100), at least one multiple coffee bean container support (300) capable of receiving a plurality of detachable coffee bean containers (100) according to claims 1 to 6 via their respective adapters (180) matched, said support (300) being connected to the coffee bean inlet (220) of said coffee brewing apparatus (200) so as to move the adapter (180) of one of the plurality of detachable coffee bean containers (100) above the coffee bean inlet (220) of said coffee brewing apparatus (200), thereby allowing said detachable coffee bean container (100) to supply a predeterminable amount of coffee beans to the coffee bean inlet (220) of the coffee brewing apparatus (200), while the others of said plurality of detachable coffee bean containers (100) received in said support (300) are prevented from supplying coffee beans at the same time.

9. The coffee brewing apparatus (200) according to claims 7 or claim 8, wherein the coffee bean grinding means or mill's driving means (251) is not arranged below the coffee bean grinding means or mill (250); preferably wherein the coffee bean grinding means or mill's driving means (251) is arranged above the coffee bean grinding means or mill (250); or wherein the coffee bean grinding means or mill's driving means (251) is arranged laterally to the coffee bean grinding means or mill (250).

10. A process for brewing coffee from coffee grounds obtained immediately before the brewing step from freshly ground coffee beans on an automatic coffee brewing apparatus (200), the process comprising the steps of
(a) providing for a coffee brewing apparatus (200) comprising a coffee bean storage container (210) capable of storing and holding coffee beans and of supplying them via a coffee bean inlet (220) for brewing coffee; a water storage container (230) capable of storing and holding water and of supplying it via a water inlet (235) to a water heating means (238) for heating the water for brewing coffee; a coffee bean passageway (240) connecting the coffee bean inlet (220) to a coffee grinding means or mill (250); a coffee grounds passageway (255) connecting the mill (250) to a coffee brewing unit (260); the coffee brewing unit (260) where fresh coffee is brewed from the coffee grounds supplied by the coffee grounds passageway (255) and the hot water supplied by water conveying means from the water heating means (238); a brewed coffee beverage outlet (270) filling the freshly brewed coffee into a drinking receptacle (280); and a depleted coffee discharge container (290);
(b) selecting a detachable coffee bean container (100) as claimed in any one or more of claims 1 to 6 and storing and holding a type of desired coffee beans in an amount sufficient for brewing at least one serving of freshly brewed coffee and capable of supplying said coffee beans from the at least one coffee bean container's housing (110) through a bottom side opening (140) and at least one coffee bean container's coffee bean passageway (170) to said coffee brewing apparatus (200);
(c) connecting the detachable coffee bean container (100) selected in step (b) to said coffee brewing apparatus' coffee bean inlet (220) by means of the coffee bean container's matching adapter (180);
(d) starting the coffee brewing automated procedure on the coffee brewing apparatus (200), whereupon
(e) the coffee brewing apparatus (200) requests a supply of a predetermined amount of coffee beans from the detachable coffee bean container (100)
(f) to be delivered from the coffee bean container's housing inner volume (130) via the coffee bean container's coffee bean guiding passageway (170) and passing the coffee bean container's bottom side opening closure (160), wherein said closure (160) is in the shape of a flat circular disk closure (161) having a sectoral opening for allowing coffee beans to pass and capable of closing said bottom side opening (140) against, or transiently opening it for, a passage of coffee beans, by a mechanism of rotating the closure (160) automatically or by hand, and
(g) to the coffee brewing apparatus' coffee bean inlet (220);
(h) wherein said closure (160) is capable of being opened simultaneously with the step of connecting to, and of being closed simultaneously with the step of disconnecting from, the coffee brewing apparatus' coffee bean inlet (220), after the adapter's matching step, by a circular movement in the plane of the adapter's contacting parts and of the coffee brewing machine's coffee bean inlet (220); and said closure (160) is capable of supplying coffee beans from the coffee bean container (100) to the connected coffee brewing apparatus' coffee bean inlet (220) upon opening an aligned route between the coffee bean container (100) and the coffee brewing apparatus' coffee bean inlet (220) by the coffee brewing apparatus' action automatically or by hand;
(i) which amount of coffee beans is delivered via the coffee brewing apparatus' coffee bean passageway (240) to the coffee bean grinding means or mill (250) and further to the coffee brewing apparatus' coffee brewing unit (260);
(j) receiving a coffee beverage at the coffee brewing apparatus' brewed coffee beverage outlet (270), while depleted coffee grounds are guided from the coffee brewing unit (260) to the depleted coffee discharge container (290); and optionally
(k) disconnecting the coffee bean container (100) connected in step (c) from said coffee brewing apparatus' coffee bean inlet (220); and optionally
(l) selecting a second detachable container (100) as claimed in any one or more of the claims 1 to 6 and storing and holding a type of coffee beans different from those stored and held by the first detachable container, connecting said second container (100) to the coffee brewing apparatus' coffee bean inlet (220) and starting the coffee brewing automatic procedure on the coffee brewing apparatus 200 with steps (d) et seq. above.

11. A process of brewing coffee from coffee grounds obtained immediately before the brewing step from freshly ground coffee beans on an automatic coffee brewing apparatus (200), the process comprising the steps of
(a) providing for a coffee brewing apparatus (200) comprising a coffee bean storage container (210) capable of storing and holding coffee beans and of supplying them via a coffee bean inlet (220) for brewing coffee; a water storage container (230) capable of storing and holding water and of supplying it via a water inlet (235) to a water heating means (238) for heating the water for brewing coffee; a coffee bean passageway (240) connecting the coffee bean inlet (220) to a coffee grinding means or mill (250); a coffee grounds passageway (255) connecting the mill (250) to a coffee brewing unit (260); the coffee brewing unit (260) where fresh coffee is brewed from the coffee grounds supplied by the coffee grounds passageway (255) and the hot water supplied by water conveying means from the water heating means (238); a brewed coffee beverage outlet (270) filling the freshly brewed coffee into a drinking receptacle (280); and a depleted coffee discharge container (290);
(b) selecting a detachable coffee bean container (100) as claimed in any one or more of claims 1 to 6 and storing and holding a type of desired coffee beans, preferably customized origin coffee beans and/or customized roastings of coffee beans and/or customized blends of coffee beans, in an amount sufficient for brewing at least one serving of freshly brewed coffee;
(c) connecting the detachable coffee bean container (100) selected in step (b), by means of the coffee bean container's matching adapter (180), to a support (300) for receiving a plurality of coffee bean containers (100) as claimed in any one or more of claims 1 to 6 and, in turn connecting said support (300) holding at least one coffee bean container (100) selected in step (b) to said coffee brewing apparatus' coffee bean inlet (220) in such a way that a selected one of the at least one coffee bean container(s) (100) received by the support (300) is capable of being moved, and is moved, into a position suitable for supplying coffee beans upon request and is capable of supplying said coffee beans from the at least one coffee bean container's housing (110) through a bottom side opening (140) and at least one coffee bean container's coffee bean passageway (170) to said coffee brewing apparatus (200);
(d) starting the coffee brewing automated procedure on the coffee brewing apparatus (200), whereupon
(e) the coffee brewing apparatus (200) requests a supply of a predetermined amount of coffee beans from the detachable coffee bean container (100) received on the support (300) being in the position suitable for supplying coffee beans
(f) to be delivered from the coffee bean container's housing inner volume (130) via the coffee bean container's coffee bean guiding passageway (170) and passing the coffee bean container's bottom side opening closure (160), wherein said closure (160) is in the shape of a flat circular disk closure (161) having a sectoral opening for allowing coffee beans to pass and capable of closing said bottom side opening (140) against, or transiently opening it for, a passage of coffee beans, by a mechanism of rotating the closure (160) automatically or by hand, and
(g) to the coffee brewing apparatus' coffee bean inlet (220); and
(h) wherein said closure (160) is capable of being opened simultaneously with the step of connecting to, and of being closed simultaneously with the step of disconnecting from, the coffee brewing apparatus' coffee bean inlet (220), after the adapter's matching step, by a circular movement in the plane of the adapter's contacting parts and of the coffee brewing machine's coffee bean inlet (220); and said closure (160) is capable of supplying coffee beans from the coffee bean container (100) to the connected coffee brewing apparatus' coffee bean inlet (220) upon opening an aligned route between the coffee bean container (100) and the coffee brewing apparatus' coffee bean inlet (220) by the coffee brewing apparatus' action automatically or by hand; and
(i) which amount of coffee beans is delivered via the coffee brewing apparatus' coffee bean passageway (240) to the coffee bean grinding means or mill (250) and further to the coffee brewing apparatus' coffee brewing unit (260);
(j) receiving a coffee beverage at the coffee brewing apparatus' brewed coffee beverage outlet (270), while depleted coffee grounds are guided from the coffee brewing unit (260) to the depleted coffee discharge container (290); and optionally
(k) disconnecting the detachable coffee bean container (100) connected to said support (300) in step (c) from said support (300) or leaving it connected for further coffee brewing steps; and optionally
(l) selecting a second or even further detachable container(s) (100) as claimed in any one or more of claims 1 to 6 and storing and holding a type of coffee beans different from those stored and held by the first detachable container (100), connecting said second or even further detachable container(s) (100) to the coffee brewing apparatus' coffee bean container support (300) in a manner that one of said second or even further container(s) (100) received by the support (300) is capable of being moved, and is moved, into a position suitable for supplying coffee beans upon request to the coffee brewing apparatus' coffee bean inlet (220) and starting the coffee brewing automatic procedure on the coffee brewing apparatus (200) with steps (d) et seq. above.

## Patentansprüche

1. Abnehmbarer Kaffeebohnen-Behälter (100) zum Lagern, Aufnehmen, und Zuführen von Kaffeebohnen, wobei der Behälter (100) umfasst:
- ein Gehäuse (110) mit wenigstens einer Außenwand (120), die ein Innenvolumen (130) definiert, das befähigt ist, Kaffeebohnen zu lagern und aufzunehmen, wobei das Gehäuse (110) wenigstens eine Öffnung (140) auf der Unterseite aufweist, die einen Kaffeebohnen-Auslass (141) definiert, der befähigt ist, Kaffeebohnen, die in dem Innenvolumen (130) gelagert und aufgenommen sind, der Außenumgebung des Gehäuses (110) zuzuführen;
- einen Verschluss (160) außerhalb der unterseitigen Öffnung (140) des Gehäuses (110), der in Form eines Verschlusses in Form einer flachen kreisrunden Scheibe (161) vorliegt, der eine Sektor-Öffnung aufweist, um zuzulassen, dass Kaffeebohnen hindurchtreten, und der befähigt ist, die unterseitige Öffnung (140) gegen ein Durchtreten von Kaffeebohnen nach außerhalb des Gehäuses (110) zu verschließen oder sie vorübergehend für ein Durchtreten von Kaffeebohnen nach außerhalb des Gehäuses (110) zu öffnen, und zwar durch einen Mechanismus eines automatischen oder manuellen Drehens des Verschlusses (160);
- einen Durchgang (170), der befähigt ist, Kaffeebohnen, die von dem Gehäuse (110) freigegeben werden, durch den Verschluss (160) in die Außenumgebung des Gehäuses (110) zu leiten;
- einen Adapter (180), der befähigt ist, den Durchgang (170) des Kaffeebohnen-Behälters (100) an einen Kaffeebohnen-Einlass (220) einer herkömmlichen Kaffeemaschine (200) anzupassen, um eine vorbestimmte Menge an Kaffeebohnen der Maschine (200) zuzuführen; wobei
- der Verschluss (160) befähigt ist, gleichzeitig mit dem Schritt des Verbindens mit dem Kaffeebohnen-Einlass (220) der Kaffeemaschine geöffnet zu werden, und gleichzeitig mit dem Schritt des Abkoppelns von dem Kaffeebohnen-Einlass (220) der Kaffeemaschine geschlossen zu werden, und zwar nach dem Anpassungsschritt des Adapters durch eine Kreisbewegung in der Ebene der Kontaktteile des Adapters und des Kaffeebohnen-Einlasses (220) der Kaffeemaschine, wobei wenigstens eine Vertiefung (184) des Verschlusses des Kaffeebohnen-Behälters dafür angepasst ist, in Eingriff mit einem Vorsprung (222) des Kaffeebohnen-Einlasses zu kommen;
- der Verschluss (160) befähigt ist, Kaffeebohnen von dem Kaffeebohnen-Behälter (100) zu einem verbundenen Kaffeebohnen-Einlass (220) einer Kaffeemaschine im Anschluss an ein Öffnen eines fluchtenden Weges zwischen dem Kaffeebohnen-Behälter (100) und dem Kaffeebohnen-Einlass (220) der Kaffeemaschine durch die Tätigkeit der Kaffeemaschine automatisch oder manuell zuzuführen; und
- der Verschluss (160) befähigt ist, zum Schließen oder Öffnen der unterseitigen Öffnung (140) des Gehäuses (110) automatisch oder manuell von der Außenseite des Gehäuses (110) her betätigt und gesteuert zu werden durch einen Mechanismus, der gewählt ist aus der Gruppe, die besteht aus Drehen des Verschlusses (161), Schieben des Verschlusses (162), Knicken des Verschlusses (163), Anheben des Verschlusses (162), Absenken des Verschlusses (162) und Kombinationen daraus.

2. Abnehmbarer Kaffeebohnen-Behälter (100) nach Anspruch 1, wobei das Gehäuse (110) hergestellt ist aus einem entsorgbaren Material; vorzugsweise wobei das Gehäuse (110) hergestellt ist aus einem standfesten entsorgbaren Material; weiter vorzugsweise wobei das Gehäuse (110) hergestellt ist aus einem standfesten, entsorgbaren und gasdichten Material; noch weiter vorzugsweise wobei das Gehäuse (110) hergestellt ist aus einem standfesten, entsorgbaren und gasdichten Material, das befähigt ist, als verkehrsfähige Kaffeebohnen-Verpackung verwendet zu werden; am meisten bevorzugt wobei das Gehäuse (110) hergestellt ist aus einem standfesten, entsorgbaren und biegsamen gasdichten Material, das befähigt ist, als verkehrsfähige Kaffeebohnen-Verpackung verwendet zu werden.

3. Abnehmbarer Kaffeebohnen-Behälter (100) nach Anspruch 1 oder Anspruch 2, wobei das Gehäuse (110) weiter eine Öffnung (150) umfasst, die einen Kaffeebohnen-Einlass definiert, der befähigt ist, mit Kaffeebohnen beschickt zu werden, die in dem Innenvolumen (130) des Gehäuses (110) gelagert und gehalten werden sollen; vorzugsweise wobei die Öffnung (150) versiegelbar ist; oder wobei die wenigstens eine unterseitige Öffnung (140), die einen Kaffeebohnen-Auslass (141) definiert, befähigt ist, Kaffeebohnen aufzunehmen, die in dem Innenvolumen (130) des Gehäuses (110) gelagert und gehalten werden sollen.

4. Abnehmbarer Kaffeebohnen-Behälter (100) nach irgendeinem oder mehreren der Ansprüche 1 bis 3, wobei der Verschluss (160) befähigt ist, durch die Tätigkeit der Kaffeemaschine automatisch betätigt und gesteuert zu werden.

5. Abnehmbarer Kaffeebohnen-Behälter (100) nach irgendeinem oder mehreren der Ansprüche 1 bis 4, wobei der Adapter (180) mit einem Schnellverschluss (182) versehen ist; vorzugsweise mit einem Schnellverschluss (182) mit einer Bajonett-Kupplung (184); noch mehr vorzugsweise mit einem Schnellverschluss (182) mit einer Bajonett-Kupplung (184) und Nut-und-Feder-Passung (186), zum Anpassen des Durchgangs (170) des Kaffeebohnen-Behälters (100) an den Kaffeebohnen-Einlass (220) einer Kaffeemaschine (200).

6. Abnehmbarer Kaffeebohnen-Behälter (100) nach irgendeinem oder mehreren der Ansprüche 1 bis 5, wobei der Behälter (100) befähigt ist, über seinen Adapter (180) an wenigstens einen Träger (300) für mehrere Kaffeebohnen-Behälter angepasst zu werden, der befähigt ist, eine Mehrzahl von Kaffeebohnen-Behältern (100) gemäß den Ansprüchen 1 bis 5 über deren jeweilige Adapter (180) und angepasst aufzunehmen, wobei der Träger (300) entweder nicht mit dem Kaffeebohnen-Einlass (220) einer Kaffeemaschine (200) verbunden ist oder der Träger (300) mit dem Kaffeebohnen-Einlass (220) einer Kaffeemaschine (200) verbunden ist, um so den Adapter (180) eines Kaffeebohnen-Behälters (100) über den Kaffeebohnen-Einlass (220) der Kaffeemaschine (200) zu bewegen und dadurch zu ermöglichen, dass der eine Kaffeebohnen-Behälter (100) eine vorbestimmbare Menge Kaffeebohnen an den Kaffeebohnen-Einlass (220) der Kaffeemaschine abgibt, während die anderen Kaffeebohnen-Behälter (100), die in dem Träger (300) aufgenommen sind, daran gehindert sind, zur gleichen Zeit Kaffeebohnen abzugeben.

7. Kaffeemaschine (200), umfassend einen Kaffeebohnen-Vorratsbehälter (210), der befähigt ist, Kaffeebohnen zu lagern und aufzunehmen und sie über einen Kaffeebohnen-Einlass (220) zum Brühen von Kaffee abzugeben; einen Wasser-Vorratsbehälter (230), der befähigt ist, Wasser zu bevorraten und aufzunehmen und es über einen Wasser-Einlass (235) an eine Wasser-Heizeinrichtung (238) zum Aufheizen des Wassers zum Brühen von Kaffee abzugeben; einen Kaffeebohnen-Durchgang (240), der den Kaffeebohnen-Einlass (220) mit einer Kaffeebohnen-Mahleinrichtung oder Mühle (250) verbindet; einen Kaffeemehl-Durchgang (255), der die Mühle (250) mit einer Kaffee-Brüh-Einheit (260) verbindet; wobei in der Kaffee-Brüh-Einheit (260) frischer Kaffee aus dem Kaffeemehl, das von dem Kaffeemehl-Durchgang (255) abgegeben wird, und dem heißen Wasser, das von einer Wassertransport-Einrichtung von der Wasser-Heizeinrichtung (238) abgegeben wird, gebrüht wird; einen Auslass (270) für ein frisch gebrühtes Kaffeegetränk, der den frisch gebrühten Kaffee in ein Trinkgefäß (280) füllt; und einen Entsorgungsbehälter (290) für ausgelaugten Kaffee; wobei die Kaffeemaschine (200) weiter wenigstens einen abnehmbaren Kaffeebohnen-Behälter (100) gemäß irgendeinem oder mehreren der Ansprüche 1 bis 6 umfasst, der mit dem Kaffeebohnen-Auslass (220) der Kaffeemaschine mittels des Anpass-Adapters (180) des wenigstens einen Kaffeebohnen-Behälters verbunden ist und befähigt ist, Kaffeebohnen von dem wenigstens einen Gehäuse (110) des Kaffeebohnen-Behälters durch eine unterseitige Öffnung (140) und wenigstens einen Kaffeebohnen-Durchgang (170) des wenigstens einen Kaffeebohnen-Behälters an die Kaffeemaschine (200) abzugeben; wobei es außerhalb der unterseitigen Öffnung (140) des Gehäuses (110) einen Verschluss (160) gibt, der in Form eines Verschlusses in Form einer flachen kreisrunden Scheibe (161) vorliegt, der eine Sektor-Öffnung aufweist, um zuzulassen, dass Kaffeebohnen hindurchtreten, und der befähigt ist, die unterseitige Öffnung (140) gegen ein Durchtreten von Kaffeebohnen nach außerhalb des Gehäuses (110) zu verschließen oder sie vorübergehend für ein Durchtreten von Kaffeebohnen nach außerhalb des Gehäuses (110) zu öffnen, und zwar durch einen Mechanismus eines automatischen oder manuellen Drehens des Verschlusses (160); wobei der Verschluss (160) befähigt ist, gleichzeitig mit dem Schritt des Verbindens mit dem Kaffeebohnen-Einlass (220) der Kaffeemaschine geöffnet zu werden, und gleichzeitig mit dem Schritt des Abkoppelns von dem Kaffeebohnen-Einlass (220) der Kaffeemaschine geschlossen zu werden, und zwar nach dem Anpassungsschritt des Adapters durch eine Kreisbewegung in der Ebene der Kontaktteile des Adapters und des Kaffeebohnen-Einlasses (220) der Kaffeemaschine; und wobei der Verschluss (160) befähigt ist, Kaffeebohnen von dem Kaffeebohnen-Behälter (100) zu dem verbundenen Kaffeebohnen-Einlass (220) einer Kaffeemaschine im Anschluss an ein Öffnen eines fluchtenden Weges zwischen dem Kaffeebohnen-Behälter (100) und dem Kaffeebohnen-Einlass (220) der Kaffeemaschine durch die Tätigkeit der Kaffeemaschine automatisch oder manuell zuzuführen.

8. Kaffeemaschine (200) nach Anspruch 7, umfassend an Stelle des wenigstens einen abnehmbaren Kaffeebohnen-Behälters (100) wenigstens einen Träger (300) für mehrere Kaffeebohnen-Behälter, der befähigt ist, eine Mehrzahl von abnehmbaren Kaffeebohnen-Behältern (100) gemäß den Ansprüchen 1 bis 6 über ihre jeweiligen Adapter (180) angepasst aufzunehmen, wobei der Träger (300) mit dem Kaffeebohnen-Einlass (220) der Kaffeemaschine (200) verbunden ist, um so den Adapter (180) eines der Mehrzahl von abnehmbaren Kaffeebohnen-Behältern (100) über den Kaffeebohnen-Einlass (220) der Kaffeemaschine (200) zu bewegen, und dadurch zu ermöglichen, dass der abnehmbare Kaffeebohnen-Behälter (100) eine vorbestimmbare Menge Kaffeebohnen an den Kaffeebohnen-Einlass (220) der Kaffeemaschine (200) abgibt, während die anderen der Mehrzahl von abnehmbaren Kaffeebohnen-Behältern (100), die in dem Träger (300) aufgenommen sind, daran gehindert sind, zur gleichen Zeit Kaffeebohnen abzugeben.

9. Kaffeemaschine (200) nach Anspruch 7 oder Anspruch 8, wobei die Antriebseinrichtung (251) der Kaffeebohnen-Mahleinrichtung oder Mühle nicht unterhalb der Kaffeebohnen-Mahleinrichtung oder Mühle (250) angeordnet ist; vorzugsweise wobei die Antriebseinrichtung (251) der Kaffeebohnen-Mahleinrichtung oder Mühle oberhalb der Kaffeebohnen-Mahleinrichtung oder Mühle (250) angeordnet ist; oder wobei die Antriebseinrichtung (251) der Kaffeebohnen-Mahleinrichtung oder Mühle seitlich zu der Kaffeebohnen-Mahleinrichtung oder Mühle (250) angeordnet ist.

10. Verfahren zum Brühen von Kaffee aus Kaffeemehl, das unmittelbar vor
dem Schritt des Brühens von Kaffee aus frisch gemahlenen Kaffeebohnen erhalten wurde, auf einer automatischen Kaffeemaschine (200), wobei das Verfahren die Schritte umfasst, dass man
(a) eine Kaffeemaschine (200) bereitstellt, die umfasst: einen Kaffeebohnen-Vorratsbehälter (210), der befähigt ist, Kaffeebohnen zu lagern und aufzunehmen und sie über einen Kaffeebohnen-Einlass (220) zum Brühen von Kaffee abzugeben; einen Wasser-Vorratsbehälter (230), der befähigt ist, Wasser zu bevorraten und aufzunehmen und es über einen Wasser-Einlass (235) an eine Wasser-Heizeinrichtung (238) zum Aufheizen des Wassers zum Brühen von Kaffee abzugeben; einen Kaffeebohnen-Durchgang (240), der den Kaffeebohnen-Einlass (220) mit einer Kaffeebohnen-Mahleinrichtung oder Mühle (250) verbindet; einen Kaffeemehl-Durchgang (255), der die Mühle (250) mit einer Kaffee-Brüh-Einheit (260) verbindet; wobei in der Kaffee-Brüh-Einheit (260) frischer Kaffee aus dem Kaffeemehl, das von dem Kaffeemehl-Durchgang (255) abgegeben wird, und dem heißen Wasser, das von einer Wassertransport-Einrichtung von der Wasser-Heizeinrichtung (238) abgegeben wird, hergestellt wird; einen Auslass (270) für ein frisch gebrühtes Kaffeegetränk, der den frisch gebrühten Kaffee in ein Trinkgefäß (280) füllt; und einen Entsorgungsbehälter (290) für ausgelaugten Kaffee;
(b) einen abnehmbaren Kaffeebohnen-Behälter (100) auswählt, wie er in irgendeinem oder mehreren der Ansprüche 1 bis 6 beansprucht ist und der einen Typ gewünschter Kaffeebohnen in einer Menge unterbringt und bereithält, die ausreichend ist zum Brühen wenigstens einer Portion frisch gebrühten Kaffees, und der befähigt ist, die Kaffeebohnen von dem Gehäuse (110) des wenigstens einen Kaffeebohnen-Behälters durch eine unterseitige Öffnung (140) und einen Kaffeebohnen-Durchgang (170) des wenigstens einen Kaffeebohnen-Behälters der Kaffeemaschine (200) zuzuleiten;
(c) den abnehmbaren Kaffeebohnen-Behälter (100), der in Schritt (b) ausgewählt wurde, mit dem Kaffeebohnen-Einlass (220) der Kaffeemaschine mittels des Anpass-Adapters (180) des Kaffeebohnen-Behälters verbindet;
(d) den automatischen Vorgang des Kaffeebrühens auf der Kaffeemaschine (200) startet, worauf
(e) die Kaffeemaschine (200) eine Zuleitung einer vorbestimmten Menge Kaffeebohnen von dem abnehmbaren Kaffeebohnen-Behälter (100) anfordert,
(f) damit sie von dem Innenvolumen (130) des Gehäuses des Kaffeebohnen-Behälters über den Kaffeebohnen-Leitdurchgang (170) des Kaffeebohnen-Behälters abgegeben werden und den Verschluss (160) der unterseitigen Öffnung des Kaffeebohnen-Behälters passieren, wobei der Verschluss (160) in Form eines Verschlusses in Form einer flachen kreisrunden Scheibe (161) vorliegt, der eine Sektor-Öffnung aufweist, um zuzulassen, dass Kaffeebohnen hindurchtreten, und der befähigt ist, die unterseitige Öffnung (140) gegen ein Durchtreten von Kaffeebohnen zu verschließen oder sie vorübergehend für ein Durchtreten von Kaffeebohnen zu öffnen, und zwar durch einen Mechanismus eines automatischen oder manuellen Drehens des Verschlusses (160); und zwar für ein Passieren
(g) zu dem Kaffeebohnen-Einlass (220) der Kaffeemaschine;
(h) wobei der Verschluss (160) befähigt ist, gleichzeitig mit dem Schritt des Verbindens mit dem Kaffeebohnen-Einlass (220) der Kaffeemaschine geöffnet zu werden, und gleichzeitig mit dem Schritt des Abkoppelns von dem Kaffeebohnen-Einlass (220) der Kaffeemaschine geschlossen zu werden, und zwar nach dem Anpassungsschritt des Adapters durch eine Kreisbewegung in der Ebene der Kontaktteile des Adapters und des Kaffeebohnen-Einlasses (220) der Kaffeemaschine; und der Verschluss (160) befähigt ist, Kaffeebohnen von dem Kaffeebohnen-Behälter (100) zu dem verbundenen Kaffeebohnen-Einlass (220) der Kaffeemaschine im Anschluss an ein Öffnen eines fluchtenden Weges zwischen dem Kaffeebohnen-Behälter (100) und dem Kaffeebohnen-Einlass (220) der Kaffeemaschine durch die Tätigkeit der Kaffeemaschine automatisch oder manuell zuzuführen;
(i) wobei die Menge an Kaffeebohnen abgegeben wird über den Kaffeebohnen-Durchgang (240) der Kaffeemaschine zu der Kaffeebohnen-Mahleinrichtung oder Mühle (250) und weiter zu der Kaffee-Brüh-Einheit (260) der Kaffeemaschine;
(j) ein Kaffee-Getränk an dem Kaffeegetränk-Auslass (270) der Kaffeemaschine empfängt, während ausgelaugtes Kaffeemehl von der Kaffee-Brüh-Einheit (260) zu dem Entsorgungsbehälter (290) für ausgelaugten Kaffee geleitet wird; und gegebenenfalls
(k) den in Schritt (c) angebrachten Kaffeebohnen-Behälter (100) von dem Kaffeebohnen-Auslass (220) der Kaffeemaschine abnimmt; und gegebenenfalls
(l) einen zweiten abnehmbaren Behälter (100), wie er in einem oder mehreren der Ansprüche 1 bis 6 beansprucht ist und der einen Typ Kaffeebohnen unterbringt und bereithält, der verschieden ist von denjenigen, die in dem ersten abnehmbaren Behälter untergebracht und bereitgehalten wurden, auswählt, den zweiten Behälter (100) mit dem Kaffeebohnen-Einlass (220) der Kaffeemaschine verbindet und den automatischen Vorgang des Brühens von Kaffee auf der Kaffeemaschine (200) mit den obigen Schritten (d) und folgende startet.

11. Verfahren zum Brühen von Kaffee aus Kaffeemehl, das unmittelbar vor dem Schritt des Brühens von Kaffee aus frisch gemahlenen Kaffeebohnen erhalten wurde, auf einer automatischen Kaffeemaschine (200), wobei das Verfahren die Schritte umfasst, dass man
(a) eine Kaffeemaschine (200) bereitstellt, die umfasst: einen Kaffeebohnen-Vorratsbehälter (210), der befähigt ist, Kaffeebohnen zu lagern und aufzunehmen und sie über einen Kaffeebohnen-Einlass (220) zum Brühen von Kaffee abzugeben; einen Wasser-Vorratsbehälter (230), der befähigt ist, Wasser zu bevorraten und aufzunehmen und es über einen Wasser-Einlass (235) an eine Wasser-Heizeinrichtung (238) zum Aufheizen des Wassers zum Brühen von Kaffee abzugeben; einen Kaffeebohnen-Durchgang (240), der den Kaffeebohnen-Einlass (220) mit einer Kaffeebohnen-Mahleinrichtung oder Mühle (250) verbindet; einen Kaffeemehl-Durchgang (255), der die Mühle (250) mit einer Kaffee-Herstellungs-Einheit (260) verbindet; wobei in der Kaffee-Herstellungs-Einheit (260) frischer Kaffee aus dem Kaffeemehl, das von dem Kaffeemehl-Durchgang (255) abgegeben wird, und dem heißen Wasser, das von einer Wassertransport-Einrichtung von der Wasser-Heizeinrichtung (238) abgegeben wird, hergestellt wird; einen Auslass (270) für ein frisch hergestelltes Kaffeegetränk, der den frisch hergestellten Kaffee in ein Trinkgefäß (280) füllt; und einen Entsorgungsbehälter (290) für ausgelaugten Kaffee;
(b) einen abnehmbaren Kaffeebohnen-Behälter (100) auswählt, wie er in irgendeinem oder mehreren der Ansprüche 1 bis 6 beansprucht ist und der einen Typ gewünschter Kaffeebohnen, vorzugsweise Kaffeebohnen mit individuell angepasster Herkunft und/oder mit individuell angepassten Röstungen von Kaffeebohnen und/oder individuell angepasste Mischungen von Kaffeebohnen, in einer Menge unterbringt und bereithält, die ausreichend ist zum Brühen wenigstens einer Portion frisch gebrühten Kaffees;
(c) den abnehmbaren Kaffeebohnen-Behälter (100), der in Schritt (b) ausgewählt wurde, mittels des Anpass-Adapters (180) des Kaffeebohnen-Behälters mit einem Träger (300) zum Aufnehmen einer Mehrzahl von Kaffeebohnen-Behältern (100) verbindet, wie sie in irgendeinem oder mehreren der Ansprüche 1 bis 6 beansprucht sind, und anschließend den Träger (300), der wenigstens einen Kaffeebohnen-Behälter (100) hält, wie er in Schritt (b) ausgewählt wurde, mit dem Kaffeebohnen-Einlass (220) der Kaffeemaschine in der Weise verbindet, dass ein ausgewählter Behälter des/der wenigstens einen Kaffeebohnen-Behälter(s) (100), der von dem Träger (300) aufgenommen ist, befähigt ist bewegt zu werden, und bewegt wird, in eine Position, die geeignet ist zum Zuleiten von Kaffeebohnen auf Anforderung, und befähigt ist, die Kaffeebohnen von dem Gehäuse (110) des wenigstens einen Kaffeebohnen-Behälters durch die unterseitige Öffnung (140) und den Kaffeebohnen-Durchgang (170) des wenigstens einen Kaffeebohnen-Behälters der Kaffeemaschine (200) zuzuleiten;
(d) den automatischen Vorgang des Kaffeebrühens auf der Kaffeemaschine (200) startet, worauf
(e) die Kaffeemaschine (200) eine Zuleitung einer vorbestimmten Menge Kaffeebohnen von dem abnehmbaren Kaffeebohnen-Behälter (100) anfordert, der auf dem Träger (300) aufgenommen ist und in der Position ist, die geeignet für ein Zuleiten von Kaffeebohnen ist,
(f) damit sie von dem Innenvolumen (130) des Gehäuses des Kaffeebohnen-Behälters über den Kaffeebohnen-Leitdurchgang (170) des Kaffeebohnen-Behälters abgegeben werden und den Verschluss (160) der unterseitigen Öffnung des Kaffeebohnen-Behälters passieren, wobei der Verschluss (160) in Form eines Verschlusses in Form einer flachen kreisrunden Scheibe (161) vorliegt, der eine Sektor-Öffnung aufweist, um zuzulassen, dass Kaffeebohnen hindurchtreten, und der befähigt ist, die unterseitige Öffnung (140) gegen ein Durchtreten von Kaffeebohnen zu verschließen oder sie vorübergehend für ein Durchtreten von Kaffeebohnen zu öffnen, und zwar durch einen Mechanismus eines automatischen oder manuellen Drehens des Verschlusses (160); und zwar durch ein Passieren
(g) zu dem Kaffeebohnen-Einlass (220) der Kaffeemaschine; und
(h) wobei der Verschluss (160) befähigt ist, gleichzeitig mit dem Schritt des Verbindens mit dem Kaffeebohnen-Einlass (220) der Kaffeemaschine geöffnet zu werden, und gleichzeitig mit dem Schritt des Abkoppelns von dem Kaffeebohnen-Einlass (220) der Kaffeemaschine geschlossen zu werden, und zwar nach dem Anpassungsschritt des Adapters durch eine Kreisbewegung in der Ebene der Kontaktteile des Adapters und des Kaffeebohnen-Einlasses (220) der Kaffeemaschine; und der Verschluss (160) befähigt ist, Kaffeebohnen von dem Kaffeebohnen-Behälter (100) zu dem verbundenen Kaffeebohnen-Einlass (220) der Kaffeemaschine im Anschluss an ein Öffnen eines fluchtenden Weges zwischen dem Kaffeebohnen-Behälter (100) und dem Kaffeebohnen-Einlass (220) der Kaffeemaschine durch die Tätigkeit der Kaffeemaschine automatisch oder manuell zuzuführen;
(i) wobei die Menge an Kaffeebohnen abgegeben wird über den Kaffeebohnen-Durchgang (240) der Kaffeemaschine zu der Kaffeebohnen-Mahleinrichtung oder Mühle (250) und weiter zu Kaffee-Brüh-Einheit (260) der Kaffeemaschine;
(j) ein Kaffee-Getränk an dem Kaffeegetränk-Auslass (270) der Kaffeemaschine empfängt, während ausgelaugtes Kaffeemehl von der Kaffee-Brüh-Einheit (260) zu dem Entsorgungsbehälter (290) für ausgelaugten Kaffee geleitet wird; und gegebenenfalls
(k) den in Schritt (c) mit dem Träger (300) verbundenen angebrachten Kaffeebohnen-Behälter (100) von dem Träger (300) abnimmt oder ihn für weitere Schritte des Kaffeebrühens verbunden lässt; und gegebenenfalls
(l) einen zweiten oder sogar weitere abnehmbare(n) Behälter (100), wie er/sie in irgendeinem oder mehreren der Ansprüche 1 bis 6 beansprucht ist/sind und der/die einen Typ Kaffeebohnen unterbringt/unterbringen und bereithält/bereithalten, der verschieden ist von denjenigen, die in dem ersten abnehmbaren Behälter (100) untergebracht und bereitgehalten wurden, auswählt; den zweiten oder sogar weitere abnehmbare(n) Behälter (100) mit dem Kaffeebohnen-Behälter-Träger (300) der Kaffeemaschine in einer Weise verbindet, dass einer der zweiten oder sogar weiteren Behälter (100), der/die von dem Träger (300) aufgenommen ist/sind, befähigt ist/sind, bewegt zu werden, und bewegt wird/werden, in eine Position, die geeignet ist zum Zuleiten von Kaffeebohnen auf Anforderung zu dem Kaffeebohnen-Einlass (220) der Kaffeemaschine; und den automatischen Vorgang des Kaffeebrühens auf der Kaffeemaschine (200) mit den obigen Schritten (d) und folgende startet.

## Revendications

1. Conteneur à grains de café (100) permettant de stocker, retenir et fournir des grains de café, ledit conteneur (100) comprenant
- une enveloppe (110) présentant au moins une paroi extérieure (120) définissant un volume intérieur (130) capable de stocker et retenir des grains de café, ladite enveloppe (110) présentant au moins une ouverture latérale inférieure (140) définissant une sortie de grains de café (141) capable de fournir des grains de café stockés et retenus au sein du volume intérieur (130) vers l'extérieur de l'enveloppe (110) ;
- une fermeture (160) extérieure à ladite ouverture latérale inférieure (140) de ladite enveloppe (110), se présentant la forme d'une fermeture discoïdale circulaire plate (161) présentant une ouverture sectorielle permettant de laisser passer des grains de café et capable de fermer ladite ouverture latérale inférieure (140), ou de l'ouvrir de manière transitoire, pour livrer ou non passage à des grains de café vers l'extérieur de l'enveloppe (110), grâce à un mécanisme de rotation de la fermeture (160) de manière automatique ou manuelle ;
- un passage (170) capable de guider des grains de café libérés de l'enveloppe (110) à travers la fermeture (160) vers l'extérieur de l'enveloppe (110);
- un adaptateur (180) capable d'associer le passage (170) du conteneur à grains de café (100) à une entrée de grains de café (220) d'un appareil traditionnel de préparation du café (200) afin de fournir une quantité prédéterminable de grains de café audit appareil (200) ; dans lequel
- ladite fermeture (160) peut être ouverte en même temps que l'étape de raccordement à l'entrée de grains de café (220) de l'appareil de préparation du café, et être fermée en même temps que l'étape consistant à s'en déconnecter, après l'étape d'association de l'adaptateur, grâce à un déplacement circulaire dans le plan des pièces de mise en contact de l'adaptateur, et de l'entrée de grains de café (220) de la machine de préparation du café ; dans lequel un au moins un renfoncement (184) de la fermeture de conteneur à grains de café est conçu pour venir en prise avec une au moins une saillie (222) de l'entrée de grains de café;
- ladite fermeture (160) peut fournir des grains de café en provenance du conteneur à grains de café (100) vers une entrée de grains de café (220) raccordée de l'appareil de préparation du café à l'ouverture d'un itinéraire aligné entre le conteneur à grains de café (100) et l'entrée de grains de café (220) de l'appareil de préparation du café grâce à l'actionnement, de manière automatique ou manuelle, de l'appareil de préparation du café ; et
- ladite fermeture (160) peut être actionnée et commandée en vue d'une fermeture ou d'une ouverture de ladite ouverture latérale inférieure (140) de ladite enveloppe (110), de manière automatique ou manuelle, depuis l'extérieur de l'enveloppe (110) grâce à un mécanisme sélectionné parmi le groupe constitué de rotation de la fermeture (161), coulissement de la fermeture (162), déformation de la fermeture (163), soulèvement de la fermeture (162), abaissement de la fermeture (162), et des combinaisons de ceux-ci.

2. Conteneur à grains de café détachable (100) selon la revendication 1, dans lequel ladite enveloppe (110) est constituée d'un matériau jetable; de manière préférée dans lequel ledit boitier (110) est constituée d'un matériau autoporteur jetable, de manière plus préférée dans lequel ladite enveloppe (110) est constituée d'un matériau autoporteur jetable et étanche au gaz ; de manière encore plus préférée dans lequel ladite enveloppe (110) est constituée d'un matériau autoporteur jetable et étanche au gaz pouvant être utilisé comme conditionnement commercialisable pour grains de café, de manière la plus préférée dans lequel ladite enveloppe (110) est constituée d'un matériau autoporteur jetable et étanche au gaz pliable pouvant être utilisé comme conditionnement commercialisable pour grains de café.

3. Conteneur à grains de café détachable (100) selon la revendication 1 ou 2, dans lequel ladite enveloppe (110) comprend en outre une ouverture (150) définissant une entrée de grains de café pouvant être alimentée en grains de café à stocker et à retenir dans le volume intérieur (130) de l'enveloppe (110), de manière préférée dans lequel ladite ouverture (150) peut être fermée de manière étanche ; ou dans lequel la au moins une ouverture latérale inférieure (140) définissant une sortie de grains de café (141) peut recevoir des grains de café destinés à être stockés et retenus dans le volume intérieur (130) de l'enveloppe (110).

4. Conteneur à grains de café détachable (100) selon l'une quelconque des revendications 1 à 3, dans lequel ladite fermeture (160) peut être actionnée et commandée grâce à l'actionnement de l'appareil de préparation du café de manière automatique.

5. Conteneur à grains de café détachable (100) selon l'une quelconque des revendications 1 à 4, dans lequel l'adaptateur (180) est muni d'une attache à libération rapide (182), de manière préférée d'une attache à libération rapide (182) présentant un couplage par baïonnette (184), de manière plus préférée d'une attache à libération rapide (182) présentant un couplage par baïonnette (184) et un emmanchement à rainure et languette (186), afin d'associer le passage (170) du conteneur à grains de café (100) à l'entrée de grains de café (220) d'un appareil de préparation du café (200).

6. Conteneur à grains de café détachable (100) selon l'une quelconque des revendications 1 à 5, ledit conteneur (100) pouvant être associé, via son adaptateur (180), à au moins un support multiple de conteneur à grains de café (300) capable d'accueillir une pluralité de conteneurs à grains de café (100) selon la revendication 1 à 5 via leurs adaptateurs (180) respectifs et associés, ledit support (300) n'étant pas raccordé à l'entrée de grains de café (220) d'un appareil de préparation du café (200), ou ledit support (300) étant raccordé à l'entrée de grains de café (220) d'un appareil de préparation du café (200) de manière à déplacer l'adaptateur (180) d'un conteneur à grains de café (100) au-dessus de l'entrée de grains de café (220) dudit appareil de préparation du café (200), ce qui permet audit un conteneur à grains de café (100) de fournir une quantité prédéterminable de grains de café vers l'entrée de grains de café (220) de l'appareil de préparation du café, tandis que les autres conteneurs à grains de café (100) accueillis dans ledit support (300) se voient empêchés de fournir des grains de café au même instant.

7. Appareil de préparation du café (200) comprenant un conteneur de stockage de grains de café (210) capable de stocker et retenir des grains de café et de les fournir via une entrée de grains de café (220) afin de préparer du café ; un conteneur de stockage d'eau (230) capable de stocker et retenir de l'eau et de la fournir via une entrée d'eau (235) vers un moyen de chauffage d'eau (238) afin de chauffer l'eau pour préparer du café ; un passage de grains de café (240) raccordant l'entrée de grains de café (220) à un moyen de mouture de grains de café ou un moulin (250) ; un passage pour grains de café moulus (255) raccordant le moulin (250) à l'unité de préparation du café (260), l'unité de préparation du café (260) étant l'endroit où du café frais est préparé à partir des grains de café moulus fournis par le passage de grains de café moulus (255) et de l'eau chaude fournie grâce à un moyen d'acheminement d'eau à partir du moyen de chauffage d'eau (238) ; une sortie de boisson au café préparée (270) versant le café fraichement préparé dans un réceptacle de dégustation (280) ; et un conteneur de déchargement de café épuisé (290), ledit appareil de préparation du café (200) comprenant en outre au moins un conteneur à grains de café détachable (100) selon l'une quelconque des revendications 1 à 6 raccordé de manière libérable à l'entrée de grains de café (220) de l'appareil de préparation du café au moyen du au moins un adaptateur d'association (180) de conteneur à grains de café et capable de fournir des grains de café à partir de la au moins une enveloppe (110) de conteneur à grains de café à travers une ouverture latérale inférieure (140) et au moins un passage de grains de café (170) de conteneur à grains de café vers ledit appareil de préparation du café (200) ; dans lequel se trouve, à l'extérieur de ladite ouverture latérale inférieure (140) de ladite enveloppe (110), une fermeture (160) se présentant sous la forme d'une fermeture discoïdale circulaire plate (161) présentant une ouverture sectorielle permettant de laisser passer des grains de café et capable de fermer ladite ouverture latérale inférieure (140), ou de l'ouvrir de manière transitoire, pour livrer ou non passage à des grains de café, grâce à un mécanisme de rotation de la fermeture (160) de manière automatique ou manuelle; ladite fermeture (160) pouvant être ouverte en même temps que l'étape de raccordement à l'entrée de grains de café (220) de l'appareil de préparation du café, et être fermée en même temps que l'étape consistant à s'en déconnecter, après l'étape d'association d'adaptateur, grâce à un mouvement circulaire dans le plan des pièces de mise en contact de l'adaptateur, et de l'entrée de grains de café (220) de la machine de préparation du café ; ladite fermeture (160) pouvant fournir des grains de café en provenance du conteneur à grains de café (100) vers l'entrée de grains de café (220) raccordée de l'appareil de préparation du café à l'ouverture d'un itinéraire aligné entre le conteneur à grains de café (100) et l'entrée de grains de café (220) de l'appareil de préparation du café grâce à l'actionnement, de manière automatique ou manuelle, de l'appareil de préparation du café.

8. Appareil de préparation du café (200) selon la revendication 7, comprenant, au lieu du au moins un conteneur à grains de café détachable (100), au moins un support multiple de conteneur à grains de café (300) capable d'accueillir une pluralité de conteneurs à grains de café détachables (100) selon l'une quelconque des revendications 1 à 6 via leurs adaptateurs (180) respectifs associés, ledit support (300) étant raccordé à l'entrée de grains de café (220) dudit appareil de préparation du café (200) de manière à déplacer l'adaptateur (180) de l'un parmi la pluralité de conteneurs à grains de café détachables (100) au-dessus de l'entrée de grains de café (220) dudit appareil de préparation du café (200), ce qui permet audit conteneur à grains de café détachable (100) de fournir une quantité prédéterminable de grains de café vers l'entrée de grains de café (220) de l'appareil de préparation du café (200), tandis que les autres parmi ladite pluralité de conteneurs à grains de café détachables (100) accueillis dans ledit support (300) se voient empêchés de fournir des grains de café au même instant.

9. Appareil de préparation du café (200) selon la revendication 7 ou 8, dans lequel le moyen d'entraînement (251) de moyen de mouture de grains de café ou de moulin n'est pas agencé en dessous du moyen de mouture de grains de café ou du moulin (250) ; de manière préférée dans lequel le moyen d'entraînement (251) du moyen de mouture de grains de café ou du moulin est agencé au-dessus du moyen de mouture de grains de café ou du moulin (250) ; ou dans lequel le moyen d'entraînement (250) du moyen de mouture de grains de café ou du moulin est agencé de manière latérale par rapport au moyen de mouture de grains de café ou au moulin (250).

10. Procédé de préparation du café à partir de grains de café moulus obtenus immédiatement avant l'étape de préparation à partir de grains de café fraichement moulus grâce à un appareil de préparation automatique du café (200), le procédé comprenant les étapes de
(a) fournir vers un appareil de préparation du café (200) comprenant un conteneur de stockage de grains de café (210) capable de stocker et retenir des grains de café et de les fournir et via une entrée de grains de café (220) afin de préparer du café ; un conteneur de stockage d'eau (230) capable de stocker et retenir de l'eau et de la fournir via une entrée d'eau (235) vers un moyen de chauffage d'eau (238) permettant de chauffer l'eau afin de préparer du café ; un passage de grains de café (240) raccordant l'entrée de grains de café (220) à un moyen de mouture de grains de café ou un moulin (250) ; un passage de grains de café moulus (255) raccordant le moulin (250) à une unité de préparation du café (260) ; l'unité de préparation du café (260) où du café frais est préparé à partir des grains de café moulus fournis par le passage de grains de café moulus (255) et de l'eau chaude fournie par le moyen d'acheminement d'eau à partir du moyen de chauffage d'eau (238) ; une sortie de boisson au café préparée (270) versant le café fraichement préparé dans un réceptacle de dégustation (280) ; et un conteneur de décharge de café épuisé (290) ;
(b) sélectionner un conteneur à grains de café détachable (100) selon l'une quelconque des revendications 1 à 6 et stocker et retenir un type de grains de café souhaité en une quantité suffisante pour préparer au moins un service de café fraichement préparé et capable de fournir lesdits grains de café à partir de la au moins une enveloppe (110) de conteneur à grains de café à travers une ouverture latérale inférieure (140) et au moins un passage de grains de café (170) du conteneur à grains de café vers ledit appareil de préparation du café (200) ;
(c) raccorder le conteneur à grains de café détachable (100) sélectionné à l'étape (b) à ladite entrée de grains de café (220) d'appareil de préparation du café au moyen de l'adaptateur d'association (180) du conteneur à grains de café ;
(d) commencer la procédure automatisée de préparation du café sur l'appareil de préparation du café (200), après quoi
(e) l'appareil de préparation du café (200) nécessite une fourniture d'une quantité prédéterminée de grains de café issus du conteneur à grains de café détachable (100)
(f) à fournir à partir du volume intérieur d'enveloppe (130) du conteneur à grains de café via le passage de guidage de grains de café (170) de conteneur à grains de café et en passant par la fermeture (160) de l'ouverture latérale inférieure du conteneur à grains de café, dans lequel ladite fermeture (160) présente une forme de fermeture discoïdale circulaire plate (161) présentant une ouverture sectorielle laissant passer les grains de café et capable de fermer ladite ouverture latérale inférieure (140), ou de l'ouvrir de manière transitoire, pour livrer ou non passage à des grains de café, grâce à un mécanisme de rotation de la fermeture (160) de manière automatique ou manuelle, et
(g) vers l'entrée de grains de café (220) de l'appareil de préparation du café ;
(h) dans lequel ladite fermeture (160) peut être ouverte en même temps que l'étape de raccordement à l'entrée de grains de café (220) de l'appareil de préparation du café, et être fermée en même temps que l'étape consistant à s'en déconnecter, après l'étape d'association d'adaptateur, grâce à un mouvement circulaire dans le plan des pièces de mise en contact de l'adaptateur, et de l'entrée de grains de café (220) de la machine de préparation du café ; et ladite fermeture (160) est capable de fournir des grains de café à partir du conteneur à grains de café (100) vers l'entrée de grains de café (220) raccordée de l'appareil de préparation du café à l'ouverture d'un itinéraire aligné entre le conteneur à grains de café (100) et l'entrée de grains de café (220) de l'appareil de préparation du café grâce à l'actionnement de l'appareil de préparation du café de manière automatique ou manuelle ;
(i) ladite quantité de grains de café est fournie via le passage de grains de café (240) de l'appareil de préparation du café vers le moyen de mouture de grains de café ou le moulin (250) et ensuite vers l'unité de préparation du café (260) de l'appareil de préparation du café ;
(j) accueillir une boisson au café au niveau de la sortie de boisson au café préparée (270) de l'appareil de préparation du café, les grains de café moulus épuisés étant guidés de l'unité de préparation du café (260) vers le conteneur de décharge de café épuisé (290) ; et éventuellement
(k) déconnecter le conteneur à grains de café (100) raccordé à l'étape (c) par rapport à ladite entrée de grains de café (220) de l'appareil de préparation du café ; et éventuellement
(l) sélectionner un deuxième conteneur détachable (100) selon l'une quelconque des revendications 1 à 6 et stocker et retenir un type de grains de café différent de ceux stockés et retenus par le premier conteneur détachable, raccorder ledit deuxième conteneur (100) à l'entrée de grains de café (220) de l'appareil de préparation du café et commencer la procédure automatique de préparation du café grâce à l'appareil de préparation du café (200) avec les étapes (d) et suivantes mentionnées ci-dessus.

11. Procédé de préparation du café à partir de grains de café moulus obtenus immédiatement avant l'étape de préparation à partir de grains de café fraichement moulus grâce à un appareil de préparation automatique du café (200), le procédé comprenant les étapes de
(a) fournir un appareil de préparation du café (200) comprenant un conteneur de stockage de grains de café (210) capable de stocker et retenir des grains de café et de les fournir via une entrée de grains de café (220) afin de préparer du café ; un conteneur de stockage d'eau (230) capable de stocker et retenir de l'eau et de la fournir via une entrée d'eau (235) vers un moyen de chauffage d'eau (238) afin de chauffer l'eau en vue de préparer du café ; un passage de grains de café (240) raccordant l'entrée de grains de café (220) à un moyen de mouture de café ou un moulin (250) ; un passage de grains de café moulus (255) raccordant le moulin (250) à une unité de préparation du café (260) ; l'unité de préparation du café (260) où du café frais est préparé à partir des grains de café moulus fournis par le passage de grains de café moulus (255) et de l'eau chaude fournie par le moyen d'acheminement d'eau à partir du moyen de chauffage d'eau (238) ; une sortie de boisson au café préparée (270) versant le café fraichement préparé dans un réceptacle de dégustation (280) ;
et un conteneur de décharge de café épuisé (290) ;
(b) sélectionner un conteneur à grains de café détachable (100) selon l'une quelconque des revendications 1 à 6 stockant et retenant un type de grains de café souhaité, de manière préférée des grains de café d'origine personnalisée et/ou des torréfactions personnalisées de grains de café et/ou des mélanges personnalisés de grains de café, en une quantité suffisante pour préparer au moins un service de café fraichement préparé ;
(c) raccorder le conteneur à grains de café détachable (100) sélectionné lors de l'étape (b), au moyen de l'adaptateur d'association (180) de conteneur à grains de café, à un support (300) permettant d'accueillir une pluralité de conteneurs à grains de café (100) selon l'une quelconque des revendications 1 à 6 et raccorder ensuite ledit support (300) retenant au moins un conteneur à grains de café (100) sélectionné lors de l'étape (b) à ladite entrée de grains de café (220) d'appareil de préparation du café de telle manière qu'un conteneur sélectionné parmi le au moins un conteneur à grains de café (100) accueilli par le support (300 peut être déplacé, et est déplacé, jusqu'à une position appropriée pour fournir des grains de café à la demande et peut fournir lesdits grains de café à partir de la au moins une enveloppe (110) de conteneur à grains de café à travers une ouverture latérale inférieure (140) et au moins un passage de grains de café (170) du conteneur à grains de café, vers ledit appareil de préparation du café (200) ;
(d) commencer la procédure automatisée de préparation du café grâce à l'appareil de préparation du café (200),
(e) l'appareil de préparation du café (200) requiert une fourniture d'une quantité prédéterminée de grains de café à partir du conteneur à grains de café détachable (100) accueilli sur le support (300) et se trouvant dans la position appropriée pour fournir des grains de café
(f) à fournir à partir du volume intérieur d'enveloppe (130) du conteneur à grains de café via le passage de guidage de grains de café (170) du conteneur à grains de café et en passant par la fermeture (160) de l'ouverture latérale inférieure du conteneur à grains de café, dans lequel ladite fermeture (160) se présente sous la forme d'une fermeture discoïdale circulaire plate (161) présentant une ouverture sectorielle laissant passer des grains de café et capable de fermer ladite ouverture latérale inférieure (140), ou de l'ouvrir de manière transitoire, pour livrer ou non passage à des grains de café, grâce à un mécanisme de rotation de la fermeture (160) de manière automatique ou manuelle, et
(g) vers l'entrée de grains de café (220) de l'appareil de préparation du café ; et
(h) dans lequel ladite fermeture (160) peut être ouverte en même temps que l'étape de raccordement à l'entrée de grains de café (220) de l'appareil de préparation du café, et être fermée en même temps que l'étape consistant à s'en déconnecter, après l'étape d'association de l'adaptateur, grâce à un mouvement circulaire dans le plan des pièces de mise en contact de l'adaptateur et de l'entrée de grains de café (220) de l'appareil de préparation du café ; et ladite fermeture (160) est capable de fournir des grains de café à partir du conteneur à grains de café (100) vers l'entrée de grains de café (220) raccordée de l'appareil de préparation du café lors d'une ouverture d'un itinéraire aligné entre le conteneur à grains de café (100) et l'entrée de grains de café (220) de l'appareil de préparation du café grâce à l'actionnement de l'appareil de préparation du café de manière automatique ou manuelle ; et
(i) ladite quantité de grains de café est fournie via le passage de grains de café (240) de l'appareil de préparation du café vers le moyen de mouture de grains de café ou le moulin (250) et ensuite vers l'unité de préparation du café (260) de l'appareil de préparation du café ;
(j) accueillir une boisson au café au niveau de la sortie de boisson au café préparée (270) de l'appareil de préparation du café, tandis que des grains de café moulus épuisés sont guidés à partir de l'unité de préparation du café (260) vers le conteneur de décharge de café épuisé (290) ; et éventuellement
(k) déconnecter le conteneur à grains de café détachable (100) raccordé audit support (300) à l'étape (c) par rapport audit support (300) ou le laisser raccordé en vue d'autres étapes de préparation du café ; et éventuellement
(l) sélectionner un deuxième conteneur détachable ou davantage (100) selon l'une quelconque des revendications 1 à 6 et stocker et retenir un type de grains de café différents de ceux stockés et retenus par le premier conteneur détachable (100), raccorder ledit deuxième conteneur détachable ou davantage (100) au support de conteneur à grains de café (300) de l'appareil de préparation du café de manière à ce qu'un parmi ledit ou lesdits deuxième conteneur ou davantage (100) accueilli(s) par le support (300) puisse être déplacé, et soit déplacé, jusque dans une position appropriée pour fournir des grains de café à la demande vers l'entrée de grains de café (220) de l'appareil de préparation du café et commencer la procédure automatique de préparation du café grâce à l'appareil de préparation du café (200) avec les étapes (d) et suivantes mentionnées ci-dessus.
